# EUROPEAN PATENT APPLICATION

(11) **EP 4 489 219 A1**
(43) Date of publication of application: **08.01.2025**
(21) Application number: 23781258.1
(22) Date of filing: 24.03.2023
(51) Int. Cl.: H01Q 1/24, H04M 1/02, H01Q 1/38, G09F 9/30

(54) **ELECTRONIC DEVICE COMPRISING ANTENNA MAINTAINING FREQUENCY BAND**

(30) Priority: 01.04.2022 KR 20220041208; 11.05.2022 KR 20220057930
(71) Applicant: Samsung Electronics Co., Ltd, Suwon-si, Gyeonggi-do 16677 (KR)
(72) Inventor: AN, Seongyong, Suwon-si Gyeonggi-do 16677 (KR); KIM, Jiho, Suwon-si Gyeonggi-do 16677 (KR); SEO, Mincheol, Suwon-si Gyeonggi-do 16677 (KR); SEOL, Kyungmoon, Suwon-si Gyeonggi-do 16677 (KR); JANG, Kyihyun, Suwon-si Gyeonggi-do 16677 (KR); PARK, Gyubok, Suwon-si Gyeonggi-do 16677 (KR); LEE, Yoonjae, Suwon-si Gyeonggi-do 16677 (KR)
(74) Representative: HGF
(86) International application number: PCT/KR2023/003972
(87) International publication number: WO 2023/191402

(57) **Abstract**

An electronic device according to one embodiment comprises: a first housing including a first conductive portion and a side member including a first non-conductive portion; a second housing which includes a second non-conductive portion and is coupled to the first housing so as to be movable with respect to the first housing; a display; and a wireless communication circuit. The second non-conductive portion, in a first state, includes a first portion overlapping at least a portion of the first conductive portion and a second portion extending from the first portion to a first side surface of the second housing, and the second portion, in a second state, is spaced apart from the first non-conductive portion. Various other embodiments may be possible.

## Description

### [Technical Field]

The disclosure relates to an electronic device comprising an antenna maintaining a frequency band.

### [Background Art]

For portability and usability of an electronic device, a flexible display capable of providing a large screen display is being developed. The flexible display may refer, for example, to a rollable display, a foldable display, or a slidable display.

The electronic device may include a plurality of antennas to support various frequency bands. For example, by feeding power to a conductive portion of a housing of a segmental structure, the conductive portion may be used as an antenna.

### [Disclosure]

### [Technical Problem]

In a flexible display of an electronic device, for example, an area of a display may be expanded or contracted according to movement of a housing. In the electronic device, two or more housings may be movably coupled to each other, in order to expand or contract a size of a display region of the flexible display. When two or more housings overlap each other, coupling may occur between a conductive portion used as an antenna and another conductive portion facing the conductive portion, and thus a radiation characteristic of the antenna may be changed.

An electronic device according to various embodiments may include an antenna structure for providing a frequency band within a designated range, independently of a change in a state of the electronic device.

The technical problems to be achieved in this document are not limited to those described above, and other technical problems not mentioned herein will be clearly understood by those having ordinary knowledge in the art to which the present disclosure belongs, from the following description.

### [Technical Solution]

An electronic device according to an embodiment may include a first housing, a second housing, a display, and wireless communication circuitry. The first housing may include a side member including a first conductive portion, a second conductive portion, and a first non-conductive portion. The second conductive portion may be spaced apart from the first conductive portion. The first non-conductive portion may be disposed between the first conductive portion and the second conductive portion. The side member may form a lateral surface of the first housing. The second housing may include a second non-conductive portion. The second housing may be movably coupled to the first housing in a first direction. The display may be disposed in the second housing. In the display, a region exposed according to movement of the second housing may be expanded or contracted. The wireless communication circuitry may be configured to communicate with an external electronic device through the first conductive portion. The second non-conductive portion may include a first portion and a second portion. The first portion may at least a partially overlap the first conductive portion, when viewed from a lateral surface of the first housing parallel to the first direction in a first state in which the second housing is inserted into the first housing. The second portion may extend from the first portion to a first lateral surface of the second housing facing the first conductive portion. The second portion of the second non-conductive portion may be spaced apart from the first non-conductive portion in the first direction, when viewed from at the lateral surface of the first housing, in a second state in which the second housing is extracted from the first housing.

An electronic device according to an embodiment may include a first housing, a second housing, a display, and wireless communication circuitry. The first housing may include a side member including a first conductive portion, a second conductive portion, and a first non-conductive portion. The second conductive portion may be spaced apart from the first conductive portion. The first non-conductive portion may be disposed between the first conductive portion and the second conductive portion. The side member may form a lateral surface of the first housing. The second housing may include a third conductive portion and a second non-conductive portion surrounding a portion of the third conductive portion. The second housing may be movably coupled to the first housing in a first direction. The display may be disposed in the second housing. The display may be expanded or contracted according to movement of the second housing. The wireless communication circuitry may be configured to communicate with an external electronic device through the first conductive portion. The second non-conductive portion may be disposed between a portion of the second housing on which the third conductive portion to be coupled with the first conductive portion is disposed and a remaining portion of the second housing.

### [Advantageous Effects]

An electronic device according to an embodiment can include a non-conductive portion to reduce coupling between conductive portions of movably coupled housings. The non-conductive portion can reduce a change in a radiation characteristic of an antenna occurring when a state of the electronic device is changed, by reducing the coupling between the conductive portions. The electronic device according to an embodiment can have a structure for an antenna having constant performance independently of the state of the electronic device.

The effects that can be obtained from the present disclosure are not limited to those described above, and any other effects not mentioned herein will be clearly understood by those having ordinary knowledge in the art to which the present disclosure belongs, from the following description.

### [Description of the Drawings]

FIG. 1 is a block diagram of an electronic device in a network environment according to various embodiments.
FIG. 2 is a block diagram of an electronic device for supporting legacy network communication and 5G network communication, according to various embodiments.
FIG. 3A is a front view of a first state of an electronic device according to an embodiment.
FIG. 3B is a rear view of a first state of an electronic device according to an embodiment.
FIG. 3C is a front view of a second state of an electronic device according to an embodiment.
FIG. 3D is a rear view of a second state of an electronic device according to an embodiment.
FIG. 4A is an exploded perspective view of an electronic device according to an embodiment.
FIG. 4B is a cross-sectional view illustrating an example in which an electronic device according to an embodiment is cut along line A-A' of FIG. 3A.
FIG. 5A is a rear view of a first state of an electronic device including an exemplary second conductive portion.
FIG. 5B is a rear view of a second state of an electronic device including an exemplary second conductive portion.
FIG. 5C is an exploded perspective view of a second housing of an electronic device according to an embodiment.
FIG. 6A is a rear view of a first state of an electronic device including an exemplary second conductive portion.
FIG. 6B is a rear view of a second state of an electronic device including an exemplary second conductive portion.
FIG. 6C is a rear view of a first state of an electronic device including an exemplary second conductive portion.
FIG. 6D is a rear view of a second state of an electronic device including an exemplary second conductive portion.
FIG. 7 is a graph illustrating a radiation characteristic of an antenna including a first conductive portion according to a length of a first portion.
FIG. 8A is a rear view of a first state of an electronic device including impedance elements and switch circuitry.
FIG. 8B is a rear view of a first state of an electronic device including impedance elements and switch circuitry.
FIG. 8C is a schematic block diagram of an electronic device of FIGS. 8A and 8B.
FIG. 9 illustrates an example of an operation of controlling switch circuitry based on a state of an electronic device according to an embodiment.
FIG. 10A is a graph illustrating a radiation characteristic change of an antenna including a first conductive portion by a first impedance element in a first state of an electronic device according to an embodiment.
FIG. 10B is a graph illustrating a radiation characteristic change of an antenna including a first conductive portion by a second impedance element in a second state of an electronic device according to an embodiment.
FIG. 11 illustrates a segmental structure of a first housing and a segmental structure of a second housing.

### [Mode for Invention]

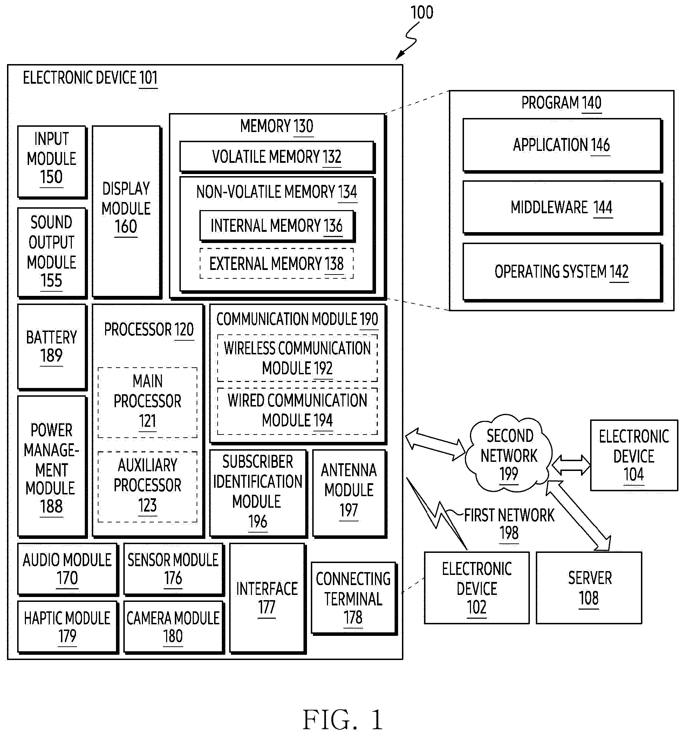

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

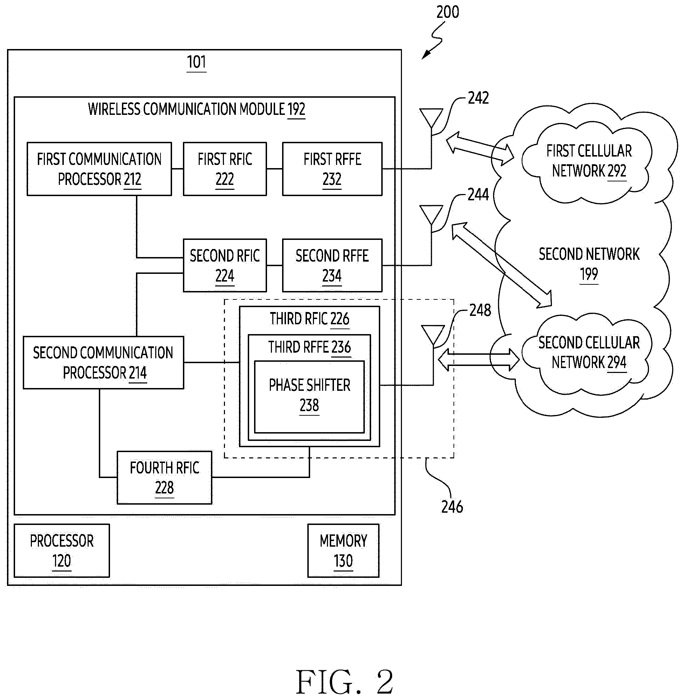

FIG. 2 is a block diagram 200 of the electronic device 101 for supporting legacy network communication and 5G network communication, according to various embodiments.

Referring to FIG. 2, the electronic device 101 may include a first communication processor 212, a second communication processor 214, a first radio frequency integrated circuit (RFIC) 222, a second RFIC 224, and a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The second network 199 may include a first cellular network 292 and a second cellular network 294. According to another embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may comprise at least a part of a wireless communication module 192. According to another embodiment, the fourth RFIC 228 may be omitted or may be included as a part of the third RFIC 226.

The first communication processor 212 may support the establishment of a communication channel of a band to be used for wireless communication with the first cellular network 292 and legacy network communication through the established communication channel. According to various embodiments, the first cellular network 292 may be a legacy network including a 2nd generation (2G), 3rd generation (3G), 4th generation (4G), and/or long-term evolution (LTE) network. The second communication processor 214 may support the establishment of a communication channel corresponding to a specified band (e.g., approximately 6 GHz to 60 GHz) among bands to be used for wireless communication with the second cellular network 294, and 5G network communication through the established communication channel. According to various embodiments, the second cellular network 294 may be a 5G network defined by 3GPP. Additionally, according to an embodiment, the first communication processor 212 or the second communication processor 214 may support the establishment of a communication channel corresponding to another specified band (e.g., approximately 6 GHz or less) among bands to be used for wireless communication with the second cellular network 294, and 5G network communication through the established communication channel. According to an embodiment, the first communication processor 212 and the second communication processor 214 may be implemented in a single chip or a single package. According to various embodiments, the first communication processor 212 or the second communication processor 214 may be formed with the processor 120, the coprocessor 123 of FIG. 1, or the communication module 190 in a single chip or a single package.

Upon transmission, the first RFIC 222 may convert a baseband signal generated by the first communication processor 212 into a radio frequency (RF) signal of approximately 700 MHz to approximately 3 GHz used in the first cellular network 292 (e.g., a legacy network). Upon reception, an RF signal may be obtained from the first cellular network 292 (e.g., a legacy network) through an antenna (e.g., the first antenna module 242), and may be preprocessed through an RFFE (e.g., the first RFFE 232). The first RFIC 222 may convert the preprocessed RF signal into a baseband signal so as to be processed by the first communication processor 212.

Upon transmission, the second RFIC 224 may convert a baseband signal generated by the first communication processor 212 or the second communication processor 214 into an RF signal (hereinafter, referred to as a 5G Sub6 RF signal) of the Sub6 band (e.g., approximately 6 GHz or less) used in the second cellular network 294 (e.g., the 5G network). Upon reception, a 5G Sub6 RF signal may be obtained from the second cellular network 294 (e.g., the 5G network) through an antenna (e.g., the second antenna module 244), and may be preprocessed through an RFFE (e.g., the second RFFE 234). The second RFIC 224 may convert the preprocessed 5G Sub6 RF signal into a baseband signal so as to be processed by a corresponding one of the first communication processor 212 or the second communication processor 214.

The third RFIC 226 may convert a baseband signal generated by the second communication processor 214 into an RF signal (hereinafter, referred to as a 5G Above6 RF signal) of the 5G Above6 band (e.g., approximately 6 GHz to approximately 60 GHz) to be used in the second cellular network 294 (e.g., the 5G network). Upon reception, a 5G Above6 RF signal may be obtained from the second cellular network 294 (e.g., the 5G network) through an antenna (e.g., the antenna 248), and may be preprocessed through the third RFFE 236. For example, the third RFFE 236 may perform preprocessing of the signal using a phase shifter 238. The third RFIC 226 may convert the preprocessed 5G Above6 RF signal into a baseband signal so as to be processed by the second communication processor 214. According to an embodiment, the third RFFE 236 may be formed as a part of the third RFIC 226.

According to an embodiment, the electronic device 101 may include the fourth RFIC 228 separately from or at least as a part of the third RFIC 226. In this case, the fourth RFIC 228 may convert the baseband signal generated by the second communication processor 214 into an RF signal (hereinafter, referred to as an intermediate frequency (IF) signal) of an intermediate frequency band (e.g., approximately 9 GHz to approximately 11 GHz), and then transmit the IF signal to the third RFIC 226. The third RFIC 226 may convert the IF signal into a 5G Above6 RF signal. Upon reception, a 5G Above6 RF signal may be received from the second cellular network 294 (e.g., the 5G network) through an antenna (e.g., the antenna 248), and may be converted into an IF signal by the third RFIC 226. The fourth RFIC 228 may convert the IF signal into the baseband signal so as to be processed by the second communication processor 214.

According to an embodiment, the first RFIC 222 and the second RFIC 224 may be implemented as a single chip or at least a part of a single package. According to an embodiment, the first RFFE 232 and the second RFFE 234 may be implemented as a single chip or at least a part of a single package. According to an embodiment, at least one of the first antenna module 242 or the second antenna module 244 may be omitted or combined with another antenna module to process RF signals of a plurality of corresponding bands.

According to an embodiment, the third RFIC 226 and the antenna 248 may be disposed on the same substrate to form a third antenna module 246. For example, the wireless communication module 192 or the processor 120 may be disposed on a first substrate (e.g., a main PCB). In this case, the third RFIC 226 may be disposed in a partial region (e.g., the lower surface) of a second substrate (e.g., a sub PCB) separate from the first substrate, and the antenna 248 may be disposed in another partial region (e.g., the upper surface) to form the third antenna module 246. According to an embodiment, the antenna 248 may include, for example, an antenna array that may be used for beamforming. By disposing the third RFIC 226 and the antenna 248 on the same substrate, it is possible to reduce the length of the transmission line therebetween. This, for example, may reduce the loss (e.g., attenuation) of a signal in a high frequency band (e.g., approximately 6 GHz to approximately 60 GHz) used for 5G network communication by the transmission line. Accordingly, the electronic device 101 may improve the quality or speed of communication with the second cellular network 294 (e.g., the 5G network).

The second cellular network 294 (e.g., the 5G network) may be operated independently of (e.g., Stand-Alone (SA)) or operated to be connected to (e.g., Non-Stand Alone (NSA)) the first cellular network 292 (e.g., the legacy network). For example, in the 5G network, there may be only an access network (e.g., 5G radio access network (RAN) or next-generation RAN (NG RAN)) and no core network (e.g., next-generation core (NGC)). In this case, after accessing the access network of the 5G network, the electronic device 101 may access an external network (e.g., the Internet) under the control of a core network (e.g., evolved packed core (EPC)) of the legacy network. Protocol information for communication with the legacy network (e.g., LTE protocol information) or protocol information for communication with the 5G network (e.g., New Radio (NR) protocol information) may be stored in the memory 230 and may be accessed by other components (e.g., the processor 120, the first communication processor 212, or the second communication processor 214).

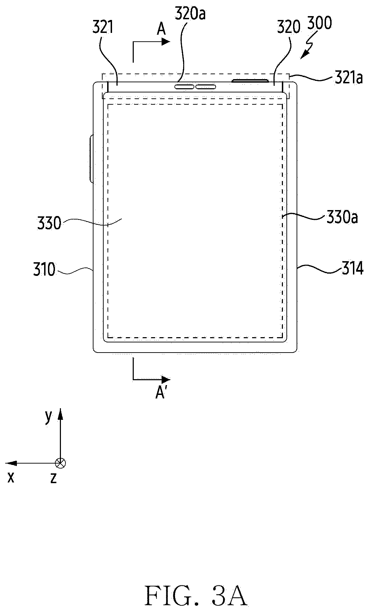

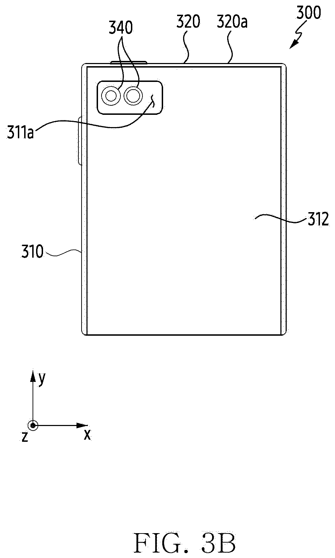

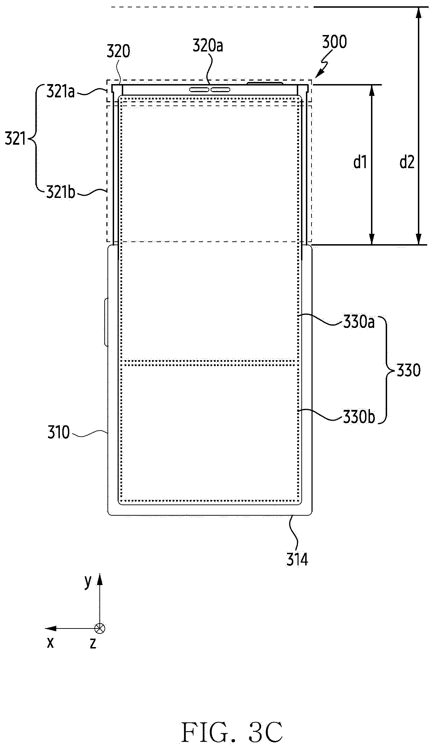

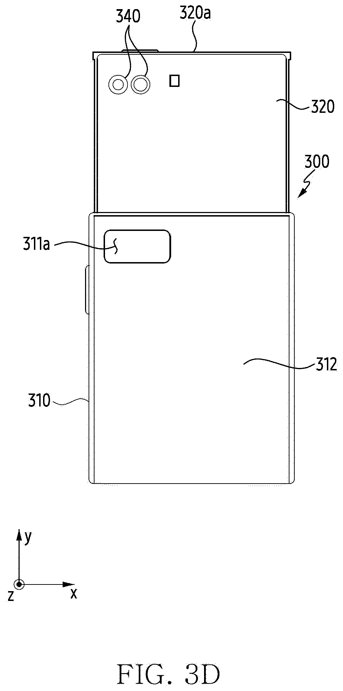

FIG. 3A is a front view of a first state of an electronic device according to an embodiment, FIG. 3B is a rear view of a first state of an electronic device according to an embodiment, FIG. 3C is a front view of a second state of an electronic device according to an embodiment, and FIG. 3D is a rear view of a second state of an electronic device according to an embodiment.

Referring to FIGS. 3A, 3B, 3C, and 3D, an electronic device 300 (e.g., the electronic device 101 of FIG. 1) according to an embodiment may include a first housing 310, a second housing 320, a display 330 (e.g., the display module 160 of FIG. 1), and a camera 340 (e.g., the camera module 180 of FIG. 1). According to an embodiment, the second housing 320 may be slidable with respect to the first housing 310. For example, the second housing 320 may move within a range of a designated distance along a first direction (e.g., +y direction) with respect to the first housing 310. When the second housing 320 moves along the first direction, a distance between a lateral surface 320a of the second housing 320 facing the first direction and the first housing 310 may increase. For example, the second housing 320 may move within a range of a designated distance along a second direction (e.g., -y direction) opposite to the first direction with respect to the first housing 310. When the second housing 320 moves in the second direction, the distance between the lateral surface 320a of the second housing 320 facing the first direction and the first housing 310 may decrease. According to an embodiment, the second housing 320 may linearly reciprocate with respect to the first housing 310, by sliding with respect to the first housing 310. For example, at least a portion of the second housing 320 may be inserted into the first housing 310 or may be extracted from the first housing 310.

According to an embodiment, as the second housing 320 is designed to be slidable with respect to the first housing 310, the electronic device 300 may be referred to as a "slidable electronic device". According to an embodiment, as at least a portion of the display 330 is designed to be wound inside the second housing 320 (or the first housing 310) based on slide movement of the second housing 320, the electronic device 300 may be referred to as a "rollable electronic device".

According to an embodiment, a first state of the electronic device 300 may be defined as a state in which the second housing 320 moves in the second direction (e.g., a contracted state or a slide-in state). For example, in the first state of the electronic device 300, the second housing 320 may not be movable in the second direction. In the first state of the electronic device 300, the distance between the lateral surface 320a of the second housing 320 and the first housing 310 may not be reduced. For example, in the first state of the electronic device 300, a portion of the second housing 320 may not be insertable. According to an embodiment, the first state of the electronic device 300 may be a state in which a second region 330b of the display 330 is not visually exposed outside the electronic device 300. For example, in the first state of the electronic device 300, the second region 330b of the display 330 may be located inside an inner space (not shown) of the electronic device 300 formed by the first housing 310 and/or the second housing 320, and thus may not be visible outside the electronic device 300.

According to an embodiment, a second state of the electronic device 300 may be defined as a state in which the second housing 320 moves in the first direction (e.g., an extracted state or a slide-out state). For example, in the second state of the electronic device 300, the second housing 320 may not be substantially movable in the first direction. In the second state of the electronic device 300, the distance between the lateral surface 320a of the second housing 320 and the first housing 310 may decrease as the second housing 320 moves, but may not increase. For example, in the second state of the electronic device 300, a portion of the second housing 320 may not be extractable from the first housing 310. According to an embodiment, the second state of the electronic device 300 may be a state in which the second region 330b of the display 330 is visually exposed outside the electronic device 300. For example, in the second state of the electronic device 300, the second region 330b of the display 330 may be extracted from the inner space of the electronic device 300, and thus may be visible outside the electronic device 300.

According to an embodiment, when the second housing 320 moves from the first housing 310 in the first direction, at least a portion of the second housing 320 and/or the second region 330b of the display 330 may be extracted from the first housing 310 by an extraction length d1 corresponding to a movement distance of the second housing 320. According to an embodiment, the second housing 320 may reciprocate within a designated distance d2. According to an embodiment, the extraction length d1 may have a size of about 0 to the designated distance d2.

According to an embodiment, a state of the electronic device 300 may be convertible between the second state and/or the first state by a manual operation by a user or an automatic operation by a driving module (not shown) disposed inside the first housing 310 or the second housing 320. According to an embodiment, an operation of the driving module may be triggered based on a user input. According to an embodiment, a user input for triggering the operation of the driving module may include a touch input, a force touch input, and/or a gesture input through the display 330. According to an embodiment, the user input for triggering the operation of the driving module may include an audio input (voice input) or an input of a physical button exposed to the outside of the first housing 310 or the second housing 320. According to an embodiment, the driving module may be driven in a semi-automatic manner in which an operation is triggered when a manual operation by an external force of a user is detected.

According to an embodiment, the first state of the electronic device 300 may be referred to as a first shape, and the second state of the electronic device 300 may be referred to as a second shape. For example, the first shape may include a normal state, a reduced state, or a closed state, and the second shape may include an opened state. According to an embodiment, the electronic device 300 may form a third state (e.g., an intermediate state), which is a state between the first state and the second state. For example, the third state may be referred to as a third shape, and the third shape may include a free-stop state.

According to an embodiment, the display 330 may be visible (or viewable) from the outside through a front direction (e.g., -z direction) of the electronic device 300 to display visual information to the user. For example, the display 330 may include a flexible display. According to an embodiment, at least a portion of the display 330 may be disposed in the second housing 320, and may be extracted from an inner space (not shown) of the electronic device 300 or inserted into the inner space of the electronic device 300 according to the movement of the second housing 320. The inner space of the electronic device 300 may refer, for example, to a space within the first housing 310 and the second housing 320 formed by coupling of the first housing 310 and the second housing 320. For example, in the first state of the electronic device 300, at least a portion of the display 330 may inserted by being rolled into the inner space of the electronic device 300. When the second housing 320 moves in the first direction in a state that at least a portion of the display 330 is inserted into the inner space of the electronic device 300, at least a portion of the display 330 may be extracted from the inner space of the electronic device 300. For example, when the second housing 320 moves in the second direction, at least a portion of the display 330 may be inserted into the inner space of the electronic device 300 by being rolled inside the electronic device 300. As at least a portion of the display 330 is extracted or inserted, an area of the display 330 visible outside the electronic device 300 may be expanded or contracted. According to an embodiment, the display 330 may include the first region 330a and/or the second region 330b.

According to an embodiment, the first region 330a of the display 330 may refer, for example, to a region of the display 330 fixedly visible outside the electronic device 300, regardless of whether the electronic device 300 is in the second state or the first state. For example, the first region 330a may refer, for example, to a partial region of the display 330 that is not rolled into the inner space of the electronic device 300. According to an embodiment, when the second housing 320 moves, the first region 330a may move together with the second housing 320. For example, when the second housing 320 moves along the first direction or the second direction, the first region 330a may move along the first direction or the second direction on the front of the electronic device 300, together with the second housing 320.

According to an embodiment, the second region 330b of the display 330 may be inserted into the inner space of the electronic device 300 or extracted from the inner space of the electronic device 300 according to the movement of the second housing 320. For example, the second region 330b of the display 330 may be a state of being inserted into the inner space of the electronic device 300 in a rolled state, in the first state of the electronic device 300. At least a portion of the second region 330b of the display 330 may be inserted into the inner space of the electronic device 300 in the first state of the electronic device 300, and may not be visible outside. For example, the second region 330b of the display 330 may be a state extracted from the inner space of the electronic device 300, in the second state of the electronic device 300. The second region 330b of the display 330 may be visible to the outside of the electronic device 300 in the second state.

According to an embodiment, in the first state of the electronic device 300, an area of the display 330 visible from the outside of the electronic device 300 may include only the first region 330a of the display 330. The area of the display 330 visible from the outside of the electronic device 300 in the second state of the electronic device 300 may include at least a portion of the first region 330a and the second region 330b of the display 330.

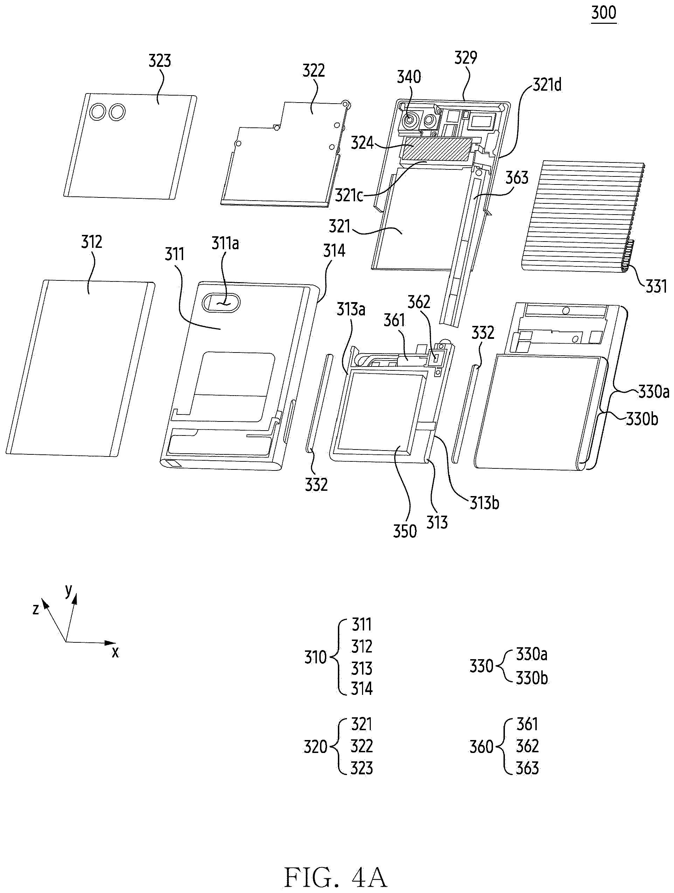

According to an embodiment, the first housing 310 of the electronic device 300 may include a first side member 314 (e.g., a first side member 314 of FIG. 4A) surrounding the inner space of the first housing 310, a rear plate 312 forming a rear surface of the housing 310, and a first support member 311 disposed in the inner space. For example, the first side member 314 may be integrally formed with the first support member 311. For example, the first side member 314 may be a separate component distinct from the first support member 311, and the first side member 314 may be coupled to the first support member 311.

According to an embodiment, the second housing 320 of the electronic device 300 may include a second support member 321 and a second side member 329 covering the inner space of the electronic device 300.

According to an embodiment, the second side member 329 may form at least a portion of a lateral surface of the second housing 320. The second support member 321 may support an electronic device (e.g., the camera 340 and/or the printed circuit board 324) disposed in the second housing 320. The second side member 329 may cover at least a portion of the second support member 321. According to an embodiment, the second support member 321 may be integrally formed with the second side member 329. The second support member 321 may be extended from at least a portion of a surface of the second side member 329 facing the inside of the second housing 320 inside the second housing 320. According to an embodiment, the second support member 321 and the second side member 329 may be integrally formed or formed of the same material.

According to an embodiment, the second support member 321 may include a first cover region 321a of the second support member 321 that is not inserted into the first housing 310 and a second cover region 321b that is inserted into or extracted from the first housing 310. The first cover region 321a of the second support member 321 may always be visible, regardless of whether the electronic device 300 is in the second state and the first state. According to an embodiment, at least a portion of the first cover region 321a of the second support member 321 may form the lateral surface 320a of the second housing 320. According to an embodiment, the second cover region 321b of the second housing 320 may not be visible in the first state, but may be visible in the second state.

The camera 340 may obtain an image of a subject, based on receiving light from the outside of the electronic device 300. According to an embodiment, the camera 340 may include one or more lenses, an image sensor, and/or an image signal processor. According to an embodiment, the camera 340 may be disposed on the second housing 320 to face a rear surface of the electronic device 300 opposite to the front surface of the electronic device 300 in which the first region 330a of the display 330 is disposed. For example, the camera 340 may be disposed on the second support member 321 of the second housing 320, and may be visible from the outside of the electronic device 300 through an opening 311a formed in the first support member 311 when the electronic device 300 is in the first state. For example, the camera 340 may be disposed on the second support member 321 of the second housing 320 and when the electronic device 300 is in the first state, not be visible outside the electronic device 300 by being covered by the first support member 311 and/or the rear plate 312.

According to an embodiment, the camera 340 may include a plurality of cameras. For example, the camera 340 may include a wide-angle camera, an ultra-wide-angle camera, a telephoto camera, a proximity camera, and/or a depth camera. However, the camera 340 is not necessarily limited to including a plurality of cameras, and may include one camera.

According to an embodiment, the camera 340 may further include a camera (not shown) directing the front of the electronic device 300 in which the first region 330a of the display 330 is disposed. When the camera 340 faces the front of the electronic device 300, the camera 340 may be an under display camera (UDC) disposed below the display 330 (e.g., in the +z direction from the display 330), but is not limited thereto.

According to an embodiment, the electronic device 300 may include a sensor module (not shown) and/or a camera module (not shown) disposed below the display 330. The sensor module may detect an external environment based on information (e.g., light) received by penetrating the display 330. According to an embodiment, the sensor module may include at least one of a receiver, a proximity sensor, an ultrasonic sensor, a gesture sensor, a gyro sensor, a barometric sensor, a magnetic sensor, an acceleration sensor, a grip sensor, a color sensor, an infrared (IR )sensor, a biometric sensor, a temperature sensor, a humidity sensor, a motor encoder, or an indicator. According to an embodiment, at least some sensor module of the electronic device 300 may be visually exposed to the outside through a partial region of the display 330. According to an embodiment, the electronic device 300 may detect an extraction length (e.g., a length dl) using a sensor module. According to an embodiment, the electronic device 300 may generate extraction information on a degree of extraction detected by the sensor. For example, the electronic device 300 may detect and/or check the degree of extraction of the second housing 320 using extraction information. According to an embodiment, the extraction information may include information on the extraction length of the second housing 320.

According to an embodiment, a coupling form of the first housing 310 and the second housing 320 is not limited to the shape and coupling illustrated in FIGS. 3A, 3B, 3C, and 3D, and may be implemented by a combination and/or coupling of other shapes or components.

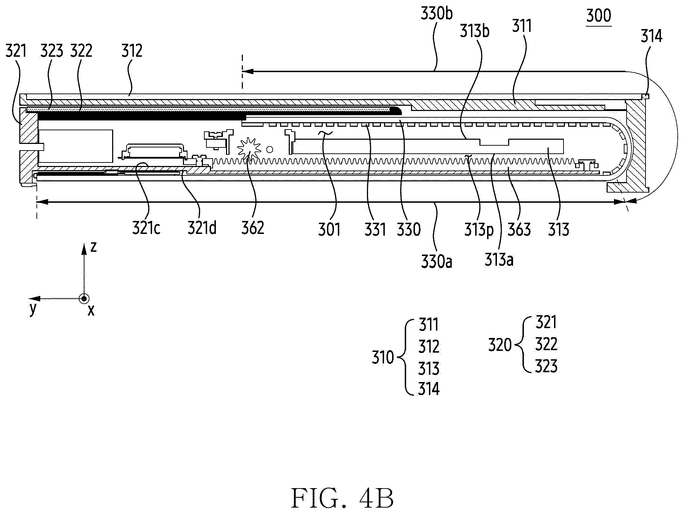

FIG. 4A is an exploded perspective view of an electronic device according to an embodiment, and FIG. 4B is a cross-sectional view illustrating an example in which an electronic device according to an embodiment is cut along line A-A' of FIG. 3A.

Referring to FIGS. 4A and 4B, an electronic device 300 according to an embodiment may include a first housing 310, a second housing 320, a display 330, a camera 340, a battery 350 (e.g., the battery 189 of FIG. 1) and a driving unit 360. According to an embodiment, the first housing 310 and the second housing 320 may be coupled to each other to form an inner space 301 of the electronic device 300. For example, in a first state of the electronic device 300, a second region 330b of the display 330 may be accommodated in the inner space 301.

According to an embodiment, the first housing 310 may include a first support member 311, a rear plate 312, a third support member 313, and/or a first side member 314. According to an embodiment, the first support member 311, the rear plate 312, the third support member 313, and the first side member 314 included in the first housing 310 may be coupled with each other and thus may not move when the second housing 320 moves with respect to the first housing 310. According to an embodiment, the first support member 311 may form at least a portion of an outer surface of the electronic device 300. For example, the first support member 311 may form at least a portion of a lateral surface of the electronic device 300, and may form at least a portion of a rear surface of the electronic device 300. According to an embodiment, the first support member 311 may provide a surface on which the rear plate 312 is seated. The rear plate 312 may be seated on a surface of the first support member 311. According to an embodiment, the first side member 314 may form a lateral surface of the first housing 310.

According to an embodiment, the third support member 313 may support internal components of the electronic device 300. For example, the third support member 313 may accommodate the battery 350. The battery 350 may be accommodated in at least one of a recess or a hole included in the third support member 313. According to an embodiment, the third support member 313 may be surrounded by the first support member 311. For example, in a first state of the electronic device 300, a surface 313a of the third support member 313 on which the battery 350 is disposed may face the first support member 311 and/or the second region 330b of the display 330. For example, in the first state of the electronic device 300, another surface 313b of the third support member 313 facing a direction opposite to the surface 313a of the third support member 313 may face the first region 330a of the display 330 or the second support member 321. For example, the third support member 313 may include aluminum as a material, but is not limited thereto.

According to an embodiment, the second housing 320 may include a second support member 321, a rear cover 322, and/or a slide cover 323. According to an embodiment, the second support member 321, the rear cover 322, and the slide cover 323 may be coupled with each other, and may move together with the second housing 320 when the second housing 320 moves relative to the first housing 310. The second support member 321 may support internal components of the electronic device 300. For example, the printed circuit board 324 and/or the camera 340 on which electronic components (e.g., the processor 120 of FIG. 1) of the electronic device 300 are disposed may be disposed on a surface 321c of the second support member 321 facing the inner space 301. Another surface 321d of the second support member 321 facing a direction opposite to the surface 321c of the second support member 321 may face the first region 330a of the display 330 when the electronic device 300 is in the first state. According to an embodiment, the rear cover 322 may be coupled to the second support member 321 to protect components of the electronic device 300 disposed on the second support member 321. For example, the rear cover 322 may cover a portion of the surface 321c of the second support member 321. According to an embodiment, the slide cover 323 may be disposed on the rear cover 322 to form an outer surface of the electronic device 300 together with the rear plate 312, the first side member 314, and the first support member 311. The slide cover 323 may be coupled to a surface of the rear cover 322 or the second support member 321 to protect the rear cover 322 and/or the second support member 321.

According to an embodiment, when the electronic device 300 is in the first state, the display 330 may be bent by being rolled into the inner space 301 at least partially. According to an embodiment, the display 330 may cover at least a portion of the third support member 313 and at least a portion of the second support member 321. For example, when the electronic device 300 is in the first state, the display 330 may cover the other surface 321d of the second support member 321, pass between the second support member 321 and the first support member 311, and extend toward the inner space 301. At least a portion of the display 330 may surround at least a portion of the third support member 313 after passing between the second support member 321 and the first support member 311. The display 330 may cover the surface 313a of the third support member 313 within the inner space 301. According to an embodiment, when the second housing 320 moves in the first direction, the second region 330b of the display 330 may be extracted from the inner space 301. For example, as the second housing 320 moves in the second direction, the display 330 may extracted from the inner space 301 by passing between the second support member 321 and the first support member 311.

According to an embodiment, the electronic device 300 may include a support bar 331 supporting the display 330 and a guide rail 332. For example, the support bar 331 may include a plurality of bars coupled to each other, and may be manufactured in a shape corresponding to the shape of the second region 330b of the display 330. According to an embodiment, as the display 330 moves, the support bar 331 may move together with the display 330. According to an embodiment, in a first state in which the second region 330b of the display 330 is wound within the inner space 301, the support bar 331 may be wound within the inner space 301 together with the second region 330b of the display 330. As the second housing 320 moves in the first direction, the support bar 331 may move together with the second region 330b of the display 330. According to an embodiment, the guide rail 332 may guide the movement of the support bar 331. For example, as the display 330 moves, the support bar 331 may move along the guide rail 332 coupled to the third support member 313. According to an embodiment, the guide rail 332 may be coupled to the third support member 313 or the first support member 311. For example, the guide rail 332 may include a plurality of guide rails 332 that are spaced apart from each other at both peripheries of the third support member 313 that are spaced apart from each other along a third direction (e.g., +x direction) perpendicular to the first direction.

According to an embodiment, the driving unit 360 may provide a driving force to the second housing 320 so that the second housing 320 may move relative to the first housing 310. According to an embodiment, the driving unit 360 may include a motor 361, a pinion gear 362, and/or a rack gear 363. The motor 361 may receive power from the battery 350 and provide driving power to the second housing 320. According to an embodiment, the motor 361 may be disposed in the first housing 310 and may not move when the second housing 320 moves with respect to the first housing 310. For example, the motor 361 may be disposed in a recess formed in the third support member 313. According to an embodiment, the pinion gear 362 may be coupled to the motor 361 and may rotate by a driving force provided from the motor 361. According to an embodiment, the rack gear 363 be engaged with the pinion gear 362 and may move according to a rotation of the pinion gear 362. For example, the rack gear 363 may linearly reciprocate in the first direction or the second direction according to the rotation of the pinion gear 362. According to an embodiment, the rack gear 363 may be disposed in the second housing 320. For example, the rack gear 363 may be coupled to the second support member 321 included in the second housing 320. According to an embodiment, the rack gear 363 may be movable inside an operating space 313p formed in the third support member 313.

According to an embodiment, when the pinion gear 362 rotates along a first rotation direction (e.g., clockwise of FIG. 4B), the rack gear 363 may move in a first direction (e.g., +y direction). When the rack gear 363 moves along the first direction, the second housing 320 coupled to the rack gear 363 may move along the first direction. As the second housing 320 moves along the first direction, an area of the display 330 visible from the outside of the electronic device 300 may be expanded. When the pinion gear 362 rotates along a second rotation direction (e.g., counterclockwise of FIG. 4B), the rack gear 363 may move in a second direction (e.g., -y direction). When the rack gear 363 moves along the second direction, the second housing 320 coupled to the rack gear 363 may move along the second direction. As the second housing 320 moves along the second direction, an area of the display 330 visible from the outside of the electronic device 300 may be contracted.

In the above description, it has been described that the motor 361 and the pinion gear 362 are disposed in the first housing 310, and the rack gear 363 is disposed in the second housing 320, but embodiments may not be limited thereto. According to embodiments, the motor 361 and the pinion gear 362 may be disposed in the second housing 320, and the rack gear 363 may be disposed in the first housing 310.

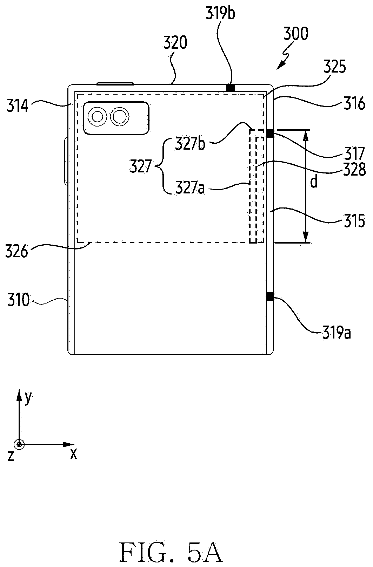

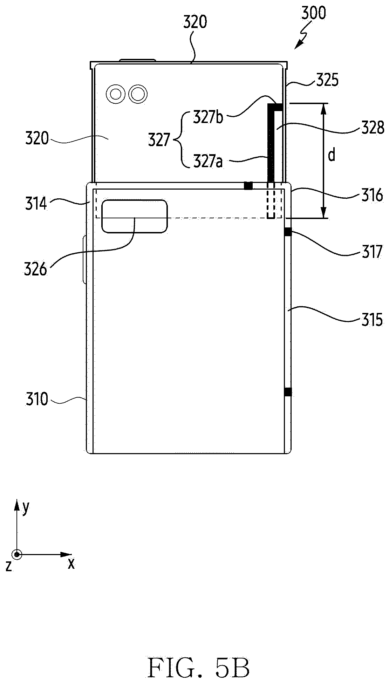

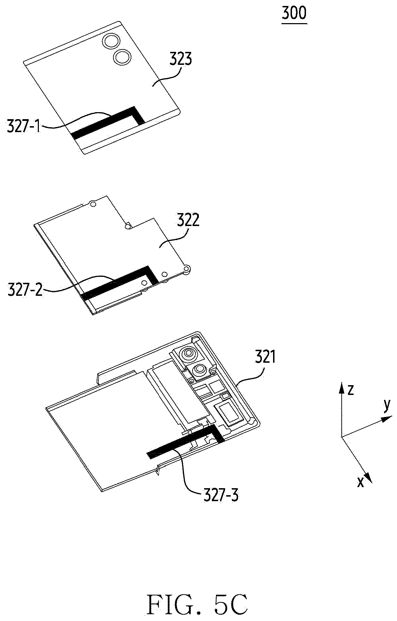

FIG. 5A is a rear view of a first state of an electronic device including an exemplary second conductive portion. FIG. 5B is a rear view of a second state of an electronic device including an exemplary second conductive portion. FIG. 5C is an exploded perspective view of a second housing of an electronic device according to an embodiment.

Referring to FIGS. 5A and 5B, an electronic device 300 according to an embodiment may include a first housing 310, a second housing 320, a display (e.g., the display 330 of FIG. 3A), and wireless communication circuitry (e.g., the wireless communication module 192 of FIG. 1).

According to an embodiment, the second housing 320 may be movably coupled to the first housing 310. For example, the second housing 320 may be slidably coupled with respect to the first housing 310 or rollably coupled. According to an embodiment, the second housing 320 may be movably coupled to the first housing 310 in a first direction (e.g., +y direction). The first housing 310 may be referred to as the first housing 310 of FIGS. 3A to 4B. The second housing 320 may be referred to as the second housing 320 of FIGS. 3A to 4B. The display 330 may be referred to as the display 330 of FIGS. 3A to 4B. Redundant descriptions of the first housing 310, the second housing 320, and the display 330 will be omitted.

According to an embodiment, a state of the electronic device 300 may be distinguished according to a relative position of the second housing 320 with respect to the first housing 310. According to an embodiment, a state in which the second housing 320 may be movable in a first direction (e.g., +y direction) of the first direction and a second direction (e.g., -y direction) opposite to the first direction with respect to the first housing 310 may be defined as a first state. According to an embodiment, a state in which the second housing 320 may be movable in the second direction among the first direction and the second direction with respect to the first housing 310 may be defined as a second state. The first state and the second state may be substantially the same as the first state and the second state described with reference to FIGS. 3A to 3D.

According to an embodiment, the first housing 310 may include a first conductive portion 315, a second conductive portion 316 spaced apart from the first conductive portion 315, and/or a first non-conductive portion 317 disposed between the first conductive portion 315 and the second conductive portion 316. The second housing 320 may include a second non-conductive portion 327. For example, the first housing 310 may include a side member (e.g., the side member 314 of FIG. 4A) forming a lateral surface of the first housing 310. For example, the first conductive portion 315 may be located in a lateral surface of the side member 314 in +x direction, and the second conductive portion 316 may be spaced apart from the first conductive portion 315 in the first direction (e.g., +y direction). Non-conductive portions may be disposed at both end portions of the first conductive portion 315 and both end portions of the second conductive portion 316, respectively. For example, among both end portionss of the first conductive portion 315, the first non-conductive portion 317 may be disposed at an end portion facing the second conductive portion 316, and a third non-conductive portion 319a may be disposed at another end portion. Among both end portions of the second conductive portion 316, the first non-conductive portion 317 may be disposed at an end portion facing the first conductive portion 315, and a fourth non-conductive portion 319b may be disposed at another end portion of the second conductive portion 316.

According to an embodiment, the second housing 320 may include a first lateral surface 325 parallel to the first direction (e.g., +y direction) and a second lateral surface 326 facing a second direction (e.g., -y direction) opposite the first direction. For example, the first lateral surface 325 may be a lateral surface in the +x direction of the second housing 320, and the second lateral surface 326 may be a lateral surface in the -y direction of the second housing 320.

According to an embodiment, the second housing 320 may include a second non-conductive portion 327. The second non-conductive portion 327 may be an opened opening region, or may be formed from a non-conductive material that is a dielectric filled in the opening. According to an embodiment, the second non-conductive portion 327 may include a first portion 327a and a second portion 327b. The first portion 327a may overlap at least a portion of the first conductive portion 315, when the first housing 310 is viewed in the -x direction in the first state. The second portion 327b may extend from the first portion 327a to the first lateral surface 325 of the second housing 320. For example, the first portion 327a may extend in the first direction (e.g., +y direction). The second portion 327b may extend in a direction (e.g., +x direction) perpendicular to the first direction from an end portion in the +y direction of the first portion 327a to form a portion of the first lateral surface 325. For example, the first portion 327a may be spaced apart from the first lateral surface 325 in the -x direction by a length of the second portion 327b in the +x direction. The second portion 327b may not overlap the first non-conductive portion 317 in the second state. However, the second non-conductive portion 327 is not limited to the above-described shape.

According to an embodiment, the second housing 320 may include a third conductive portion 328 at least partially surrounded by the second non-conductive portion 327. The third conductive portion 328 may form a portion of the first lateral surface 325 of the second housing 320. In the first state, the third conductive portion 328 may face the first conductive portion 315.

According to an embodiment, wireless communication circuitry (e.g., the wireless communication module 192 of FIG. 1) may be electrically connected to the first conductive portion 315. The first conductive portion 315 may be fed from the wireless communication circuitry 192 and thus operated as an antenna capable of transmitting and/or receiving wireless signals on a designated frequency band. The wireless communication circuitry 192 may be configured to wirelessly communicate with an external electronic device through the first conductive portion 315.

According to an embodiment, a size of an overlapping region in which the first housing 310 and the second housing 320 overlap each other may be changed according to a state of the electronic device 300. Referring to FIGS. 5A and 5B, a size of an overlapping region between the first lateral surface 325 of the second housing 320 and the side member 314 of the first housing 310 in the first state may be larger than a size of an overlapping region between the first lateral surface 325 of the second housing 320 and the side member 314 of the first housing 310 in the second state. As the state of the electronic device 300 is changed from the first state to the second state, the size of the overlapping region between the first lateral surface 325 of the second housing 320 and the side member 314 of the first housing 310 may decrease.

According to an embodiment, the first conductive portion 315 and a portion of the first lateral surface 325 may face each other. When a conductive material (e.g., metal) is included in the first lateral surface 325, coupling may occur by an electromagnetic interaction between the first lateral surface 325 and the first conductive portion 315. According to an embodiment, the first conductive portion 315 may be coupled with the third conductive portion 328. The coupling may cause parasitic capacitance between the first conductive portion 315 and the first lateral surface 325. Since a size at which the first conductive portion 315 and the first lateral surface 325 face each other is changed according to the state of the electronic device 300, a parasitic capacitance value may be changed. For example, since a size of the overlapping region between the first lateral surface 325 and the first conductive portion 315 is relatively large in the first state, the parasitic capacitance value in the first state may be relatively large. Since the size of the overlapping region between the first lateral surface 325 and the first conductive portion 315 is relatively small in the second state, the parasitic capacitance value in the second state may be relatively small.

According to an embodiment, gain of an antenna formed by the first conductive portion 315 may be changed based on the state of the electronic device 300. For example, since the size of the overlapping region between the first lateral surface 325 and the first conductive portion 315 in the first state is relatively larger than the size of the overlapping region between the first lateral surface 325 and the first conductive portion 315 in the second state, effect of the first lateral surface 325 on the first conductive portion 315 in the first state may be large. According to an embodiment, the gain of the antenna in the first state may be lower than the gain of the antenna in the second state. In the first state, communication performance of wireless signals through the antenna may be deteriorated.

According to an embodiment, the first conductive portion 315 may be designed to have a target resonance frequency in a designated frequency band. A change in the value of the parasitic capacitance may shift the resonant frequency of the antenna including the first conductive portion 315. Since the value of the parasitic capacitance is relatively large in the first state, a resonance frequency of an antenna including the first conductive portion 315 may be lower than the target resonance frequency. Since the value of the parasitic capacitance is relatively small in the second state, the resonance frequency of the antenna including the first conductive portion 315 may be higher than the target resonance frequency. As described above, when the resonant frequency of the antenna is changed according to the state of the electronic device 300, it may be difficult for the antenna to smoothly perform transmission and/or reception wireless signals on a designated frequency band.

According to an embodiment, the second non-conductive portion 327 including a non-conductive material (e.g., polymer) may overlap at least a portion of the first conductive portion 315 when the first housing 310 is viewed in the x direction. The second non-conductive portion 327 may reduce coupling between the first conductive portion 315 and the first lateral surface 325 when the first conductive portion 315 operates as an antenna. For example, the second non-conductive portion 327 may limit a region of the second housing 320 coupled to the first conductive portion 315 to the third conductive portion 328 surrounded by the second non-conductive portion 327. When the second non-conductive portion 327 is absent, a region of the second housing 320 coupled to the first conductive portion 315 may be larger than a region occupied by the third conductive portion 328. When the first conductive portion 315 and the second housing 320 are coupled, the first conductive portion 315 and a region of the second housing 320 facing the first conductive portion 315 may operate like a capacitor. The first conductive portion 315 and the region of the second housing 320 that operate as a capacitor may shift a resonant frequency of an antenna including the first conductive portion 315. When the coupling between the first conductive portion 315 and the second housing 320 is reduced, a value of the capacitance caused by the first conductive portion 315 and the region of the second housing 320 facing the first conductive portion 315 may be reduced. When the value of the capacitance is reduced, a shift of the resonant frequency of the antenna according to the state of the electronic device 300 may decrease. By the decrease in the frequency shift, the frequency band of the antenna may be maintained substantially similar in the first state and the second state. According to an embodiment, a difference in radiation characteristics of an antenna according to the state of the electronic device 300 may decrease.

According to an embodiment, the first portion 327a may extend from the second lateral surface 326 of the second housing 320 facing the second direction (e.g., -y direction), along the first lateral surface 325 of the second housing 320 facing the first conductive portion 315 in the first state, to a region corresponding to the first non-conductive portion 317. According to an embodiment, a second portion 327b may overlap the first non-conductive portion 317 when viewed form the lateral surface of the first housing 310 in the -x direction in the first state. Referring to FIG. 5A, a length d of the first lateral surface 325 overlapping the first conductive portion 315 may be a length of the second non-conductive portion 327 extending along the first direction +y. The first portion 327a of the second non-conductive portion 327 may be formed from the second lateral surface 326, along the first lateral surface 325, to a region corresponding to the first non-conductive portion 317. Referring to FIG. 5B, the first portion 327a may be spaced apart from the first non-conductive portion 317 in the first direction (e.g., +y direction), and thus may not overlap the first non-conductive portion 317, when the lateral surface of the first housing 310 is viewed in the -x direction, in the second state. In an embodiment, at least a portion of the first portion 327a may extend in the first direction from a boundary between the first housing 310 and the second housing 320 in the second state, and may be exposed to the outside. The second portion 327b formed at an end portion of the first portion 327a in the first direction may not overlap the first housing 310 in the second state. For example, the first portion 327a may be spaced apart from the first non-conductive portion 317 in the first direction (e.g., +y direction), when viewed from a lateral surface of the first housing 310 in the second state. In the second state, the second portion 327b may be disposed at an upper portion (e.g., in the +y direction) of the first housing 310, and exposed to the outside. When the state of the electronic device 300 is changed from the first state to the second state, the second housing 320 may move in the first direction (e.g., the +y direction). As the second housing 320 moves in the first direction, the second housing 320 may be extracted from the inside of the first housing 310. In the second state in which the second housing 320 is maximally extracted, the first portion 327a may not overlap the first non-conductive portion 317 and may be spaced apart from the first non-conductive portion 317 when the viewed from first conductive portion 315 of the first housing 310 in the -x direction. When the electronic device 300 is in the second state, the first portion 327a may not overlap the first conductive portion 315, when viewed from the first conductive portion 315 in the -x direction.

Referring to FIG. 5C, according to an embodiment, the second non-conductive portion 327 may include a plurality of portions. In an embodiment, a plurality of second non-conductive portions 327-1, 327-2, and 327-3 may be formed on at least one of the second support member 321, the rear cover 322, and/or the slide cover 323, according to a material of the second support member 321, the rear cover 322, and/or the slide cover 323 included in the second housing 320. According to an embodiment, each of the second non-conductive portions 327-1, 327-2, and 327-3 may be disposed to overlap each other in the +z direction. According to an embodiment, when a portion of the second support member 321, the rear cover 322, and the slide cover 323 are formed from a non-conductive material (e.g., polymer), a portion of the plurality of second non-conductive portions 372-1, 327-2, and 327-3 may be omitted. For example, when the second support member 321 and the rear cover 322 are formed of a conductive material, and the slide cover 323 is formed of a non-conductive material, the second non-conductive portion 327-1 formed on the slide cover 323 among the second non-conductive portions 327-1, 327-2, and 327-3 may be omitted.

According to an embodiment, in the first state of the electronic device 300, when the first portion 327a is formed across the entire region of the second housing 320 that overlaps the first conductive portion 315, and the second portion 327b overlaps the first non-conductive portion 317, a length of the second non-conductive portion 327 may be referred to as a length d of the first portion 327a overlapping the first conductive portion 315. When the second non-conductive portion 327 has the length d of the first portion 327a overlapping the first conductive portion 315, a radiation characteristic change of an antenna including the first conductive portion 315 according to a change in the state of the electronic device 300 may decrease. Even when the state of the electronic device 300 is changed, a frequency band of signals provided through the first conductive portion 315 operating as the antenna may be maintained to be substantially similar.

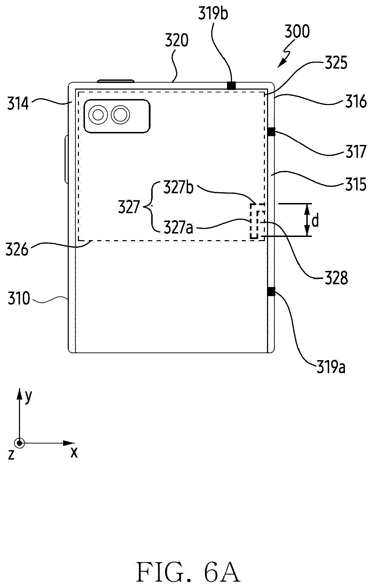

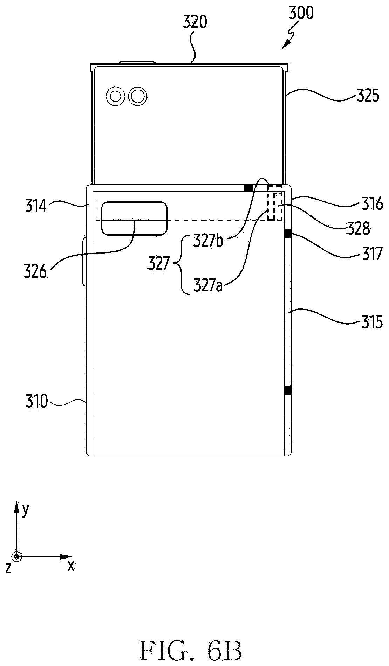

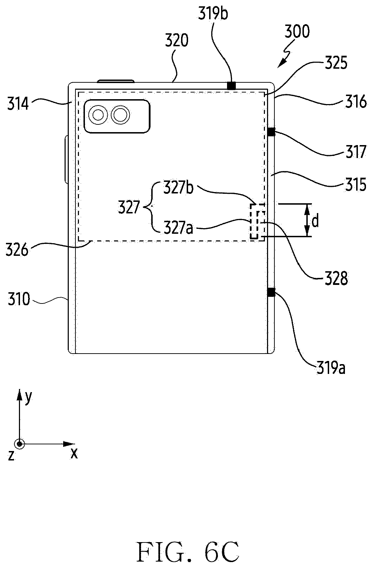

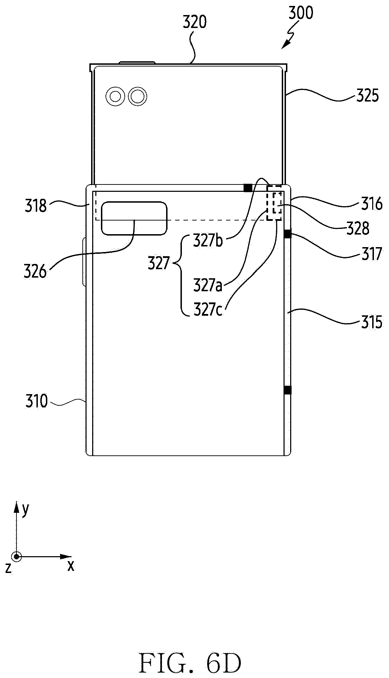

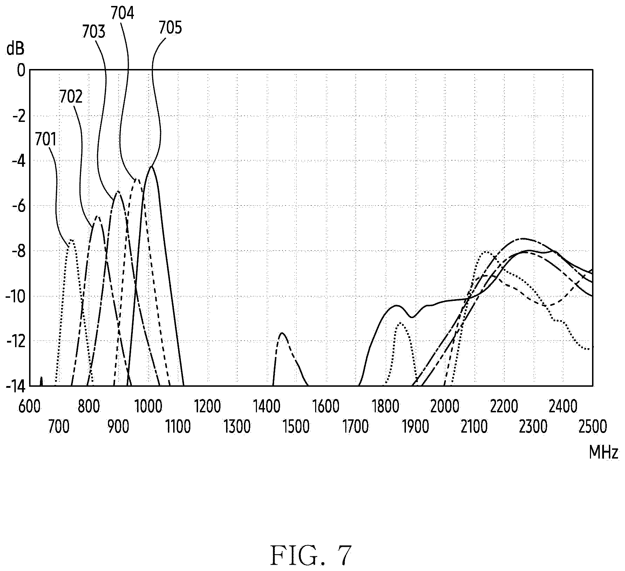

FIG. 6A is a rear view of a first state of an electronic device including an exemplary second conductive portion. FIG. 6B is a rear view of a second state of an electronic device including an exemplary second conductive portion. FIG. 6C is a rear view of a first state of an electronic device including an exemplary second conductive portion. FIG. 6D is a rear view of a second state of an electronic device including an exemplary second conductive portion. FIG. 7 is a graph illustrating a radiation characteristic of an antenna including a first conductive portion according to a length of a first portion.

According to an embodiment, a length d of a first portion 327a of a second non-conductive portion 327 may be shorter than a region of the second housing 320 in which a second housing 320 and a first conductive portion 315 overlap. Referring to FIG. 6A, the first portion 327a may extend from a second lateral surface 326 of the second housing 320 facing the second direction, along a first lateral surface 325 of the second housing 320 facing the first conductive portion 315 in the first state, to a region between a second portion 327b and the second lateral surface 326. The second portion 327b may overlap the first conductive portion 315 when viewed from the lateral surface of the first housing 310 in the -x direction, in the first state.

According to an embodiment, the length d of the first portion 327a may be shorter than a length of the first conductive portion 315 extending in the +y direction. According to an embodiment, the first portion 327a may extend from the second lateral surface 326 along the first lateral surface 325. When the first portion 327a extends to a region corresponding to the first non-conductive portion 317, the length d of the first portion 327a may correspond to the length of the first conductive portion 315. In the second state, when viewed from the lateral surface of the first housing 310 in the -x direction, the first portion 327a may overlap the second conductive portion 316. In an embodiment, in the second state, the length d of the first portion 327a may be less than a length in the +y direction of the second conductive portion 316. For example, when the length d of the first portion 327a is less than the length in the +y direction of the second conductive portion 316, the second non-conductive portion 327 may be located inside the first housing 310, independently of a state of the electronic device 300. For example, when the electronic device 300 is in the first state, the first portion 327a may be located inside the first housing 310. The first portion 327a may be located inside the first housing 310 even when the electronic device 300 is in the second state. For example, regardless of the state of the electronic device 300, the first portion 327a may be surrounded by the first housing 310 and may not be visually exposed to the outside of the electronic device 300.

According to an embodiment, the length d of the first portion 327a is described to be smaller than the length in the +y direction of the second conductive portion 316, but is not limited thereto. The length d of the first portion 327a may be greater than or equal to the length in the +y direction of the second conductive portion 316 and less than or equal to the length of the first conductive portion 315. When the length d of the first portion 327a increase, coupling between the first lateral surface 325 and the first conductive portion 315 may decrease. Due to the decrease in coupling, a change in a radiation characteristic of the antenna according to the state of the electronic device 300 may decrease. For example, when the state of the electronic device 300 is changed from the second state to the first state, movement of the resonance frequency and gain reduction may decrease. When the length d of the first portion 327a is shortened, rigidity of the second housing 320 may increase. Since the second non-conductive portion 327 is an opening region or has a form in which a non-conductive material is filled in the opening region, rigidity may be reduced compared to a case where a conductive material (e.g., metal) is filled. As the length d of the first portion 327a is shorter, the amount of conductive material increase, and thus the rigidity of the second housing 320 may increase. In case that the length d of the first portion 327a is less than the length in the +y direction of the second conductive portion 316, since the first portion 327a is located inside the first housing 310 regardless of the state of the electronic device 300, the second non-conductive portion 327 may not be exposed to the outside.

Referring to FIGS. 6C and 6D, the second non-conductive portion 327 may include a first portion 327a extending in a first direction (e.g., +y direction), a second portion 327b extending in a direction (e.g., +x direction) perpendicular to the first direction from an end portion in the +y direction of the first portion 327a and including a portion of the first lateral surface 325, and a third portion 327c extending in a direction (e.g., +x direction) perpendicular to the first direction from an end portion in the -y direction of the first portion 327a and including a portion of the first lateral surface 325. The third portion 327c may form a portion of the second lateral surface 326 of the second housing 320. The second portion 327b and the third portion 327c may face each other.

According to an embodiment, a third conductive portion 328, which is a portion of the second housing 320, may be surrounded by the second non-conductive portion 327. The third conductive portion 328 surrounded by the first non-conductive portion 327a, the second non-conductive portion 327b, and the third non-conductive portion 327c may be electrically disconnected from a remaining portion of the second housing 320. The third conductive portion 328 may be spaced apart from another conductive portion of the second housing 320. As the third conductive portion 328 is spaced apart from the other conductive portion of the second housing 320, electromagnetic interaction between the third conductive portion 328 and the first side member 314 of the first housing 310 may decrease. For example, referring to FIG. 6D, as the second housing 320 moves in the first direction (e.g., +y direction), in the second state, the first conductive portion 315 and the second housing 320 may be spaced apart from each other. According to an embodiment, in the second state, the third conductive portion 328 and the second conductive portion 316 may overlap each other. Since the third conductive portion 328 is surrounded by the second non-conductive portion 327, electromagnetic interaction between the third conductive portion 328 and the second conductive portion 316 may decrease. When the second conductive portion 316 operates as a portion of an antenna for transmitting and/or receiving a wireless signal, the effect of the third conductive portion 328 on the signal may decrease.

According to the above-described embodiment, the electronic device 300 may increase the rigidity of the second housing 320, by reducing a region occupied by the second non-conductive portion 327. By reducing external exposure of the second non-conductive portion 327 covered by the first housing 310, a design of the electronic device 300 may be improved.

Referring to FIG. 7, a radiation characteristic of an antenna including the first conductive portion 315 according to a length of the first portion 327a may be identified. A first graph 701 indicates a radiation characteristic of an antenna in a first state when the second non-conductive portion 327 is not included. A second graph 702 indicates a radiation characteristic of the antenna in the first state, when the second non-conductive portion 327 is included, and the length d of the first portion 327a is 1/3 of a length at which the second housing 320 and the first conductive portion 315 overlap. A third graph 703 indicates a radiation characteristic of the antenna in the first state, when the second non-conductive portion 327 is included, and the length d of the first portion 327a is a half of the length at which the second housing 320 and the first conductive portion 315 overlap. A fourth graph 704 indicates a radiation characteristic of the antenna in the first state, when the second non-conductive portion 327 is included, and the length d of the first portion 327a is a length in which the second housing 320 and the first conductive portion 315 overlap. A fifth graph 705 illustrates a radiation characteristic of the antenna in the second state. The horizontal axis of the graph is frequency (unit: MHz) and the vertical axis of the graph is gain (unit: dB).

Comparing the first graph 701 with the fifth graph 705, since coupling between the first lateral surface 325 and the first conductive portion 315 is large in case that the second non-conductive portion 327 is not included, a shift amount of the resonance frequency of the antenna and a gain reduction amount of the antenna may be the greatest, according to the state of the electronic device 300. When the second non-conductive portion 327 is not included, as the second state is changed to the first state, a resonance frequency of the antenna may shift by about 350 MHz, and gain of the antenna may decrease by about 3.3 dB. When the second non-conductive portion 327 is not included, since a change in a radiation characteristic of the antenna is large according to a state of the electronic device 300, wireless communication with an external electronic device may be difficult.

Comparing the second graph 702, the third graph 703, and the fourth graph 704, as a length of the first portion 327a of the second non-conductive portion 327 increases, a difference in radiation characteristics of the antenna according to the state of the electronic device 300 may decrease. Comparing the fourth graph 704 with the fifth graph 705, when the length d of the second non-conductive portion 327 is maximum, as the second state is changed to the first state, the resonance frequency of the antenna may shift by about 50 MHz, and the gain of the antenna may decrease by about 0.5 dB. When a length d of the first portion 327a is maximum, since the radiation characteristic of the antenna in the first state and the radiation characteristic of the antenna in the second state are substantially the same, so that the electronic device 300 may stably communicate with an external electronic device. Comparing the second graph 702, the third graph 703, and the fourth graph 704, as a length of the first portion 327a decreases, a shift amount of the resonance frequency of the antenna and the amount of decrease in the gain of the antenna may increase, but the amount of change may be smaller than that of the first graph 701. Even when the length d of the first portion 327a is 1/3 of a length at which the second housing 320 and the first conductive portion 315 overlap, since the shift amount of the resonance frequency of the antenna and the gain reduction amount of the antenna may be reduced, the electronic device 300 according to an embodiment may stably communicate with an external electronic device, compared to a case where the second non-conductive portion 327 is not included.

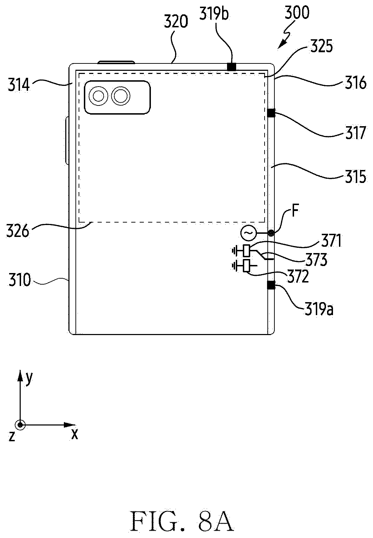

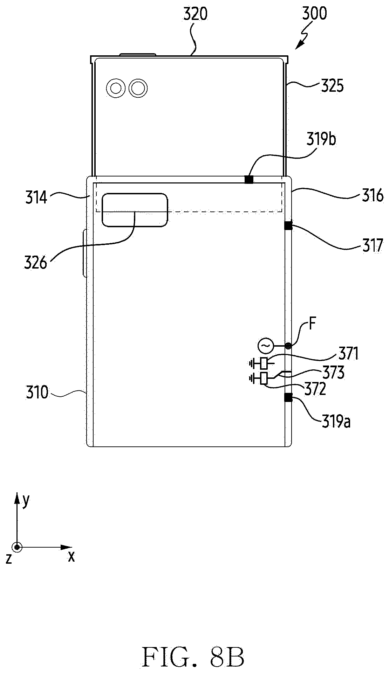

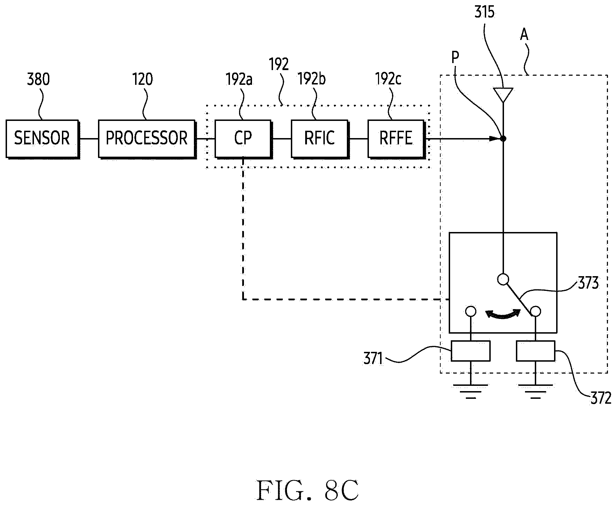

FIG. 8A is a rear view of a first state of an electronic device including impedance elements and switch circuitry. FIG. 8B is a rear view of a first state of an electronic device including impedance elements and switch circuitry. FIG. 8C is a schematic block diagram of an electronic device of FIGS. 8A and 8B.

Referring to FIGS. 8A, 8B, and 8C, an electronic device 300 according to an embodiment may include at least one processor 120, a first impedance element 371, a second impedance element 372, switch circuitry 373, and/or a sensor 380.

According to an embodiment, the first impedance element 371 and the second impedance element 372 may be electrically connected to a first conductive portion 315 through the switch circuitry 373. The switch circuitry 373 may be electrically connected to the first conductive portion 315. At least one processor 120 may selectively electrically connect the first conductive portion 315 to the first impedance element 371 or the second impedance element 372, by controlling the switch circuitry 373. For example, when the switch circuitry 373 is electrically connected to the first impedance element 371, the first impedance element 371 and the first conductive portion 315 may be electrically connected. For example, when the switch circuitry 373 is electrically connected to the second impedance element 372, the second impedance element 372 and the first conductive portion 315 may be electrically connected.

According to an embodiment, when a feeding point F of the first conductive portion 315 is fed, an antenna, including the first conductive portion 315, capable of transmitting and/or receiving signals on a designated frequency band may be formed. According to an embodiment, a resonant frequency of the antenna may be adjusted by an impedance value of the first impedance element 371 or an impedance value of the second impedance element 372 selectively connected to the switch circuitry 373. For example, when the switch circuitry 373 is connected to the first impedance element 371, a resonant frequency of the antenna may be adjusted by the impedance value of the first impedance element 371. For example, when the switch circuitry 373 is connected to the second impedance element 372, a resonant frequency of the antenna may be adjusted by the impedance value of the second impedance element 372.

According to an embodiment, the sensor 380 may be configured to detect a movement distance of the second housing 320. At least one processor 120 may be configured to obtain data on the movement distance of the second housing 320 from the sensor 380, and control the switch circuitry 373 based on the obtained data. The sensor 380 may include at least one of a proximity sensor, an illuminance sensor, a magnetic sensor, a hall sensor, a bending sensor, and an infrared sensor, or a combination thereof. For example, the sensor 380 may be a hall sensor disposed in the first housing 310, and the second housing 320 may include a magnetic material (e.g., magnet) that causes a hall effect. The hall sensor may detect movement of a magnetic material by sliding of the second housings 320 and 320. The hall sensor may identify a movement distance of the second housing 320 based on a change in the magnitude of the magnetic field formed by the magnetic material disposed in the second housing 320 and/or the display 330. The positions of the hall sensor and the magnetic material are not limited thereto, and the hall sensor may be disposed in the second housing 320, and the magnetic material may be disposed in the first housing 310.

According to an embodiment, the sensor 380 may detect the movement distance of the second housing 320 and obtain data on the movement distance of the second housing 320. At least one processor 120 may receive the obtained data. At least one processor 120 may identify a state of the electronic device 300 through the received data. At least one processor 120 may adjust a resonance frequency of the antenna including the first conductive portion 315 by adjusting the switch circuitry 373 based on the identified state of the electronic device 300.

Referring to FIG. 8A, in a first state, at least one processor 120 (e.g., at least one processor 120 of FIG. 8C) may control the switch circuitry 373 so that the first conductive portion 315 is electrically connected to the first impedance element 371. The first impedance element 371 may be electrically connected to the first conductive portion 315 through the switch circuitry 373. In the first state, the first conductive portion 315 and the first lateral surface 325, which are coupled, may operate as a capacitor. Due to the increased capacitance by adding the capacitor, a resonance frequency of the antenna in the first state may be lower than a resonance frequency in the second state. In the first state, the first impedance element 371 electrically connected to the first conductive portion 315 by the switch circuitry 373 may be configured to increase the resonant frequency of the antenna formed by the first conductive portion 315. For example, the first impedance element 371 may include an inductor for offsetting an increased capacitance value. As the first conductive portion 315 and the first impedance element 371 are electrically connected, the resonance frequency of the antenna shifted downward by the increased capacitance may be shifted upward. In the first state, the resonant frequency of the antenna may be adjusted to a designated resonant frequency by the first impedance element 371.

Referring to FIG. 8B, in the second state, at least one processor 120 (e.g., at least one processor 120 of FIG. 8C) may control the switch circuitry 373 so that the first conductive portion 315 is electrically connected to the second impedance element 372. The second impedance element 372 may be electrically connected to the first conductive portion 315 through the switch circuitry 373. In the second state, since the first conductive portion 315 and the first lateral surface 325 do not overlap, or an overlapping portion of the first conductive portion 315 and the first lateral surface 325 is smaller than in the first state, a resonance frequency of an antenna in the second state may be higher than a resonance frequency of an antenna in the first state. In the second state, the second impedance element 372 electrically connected to the first conductive portion 315 by the switch circuitry 373 may be configured to downwardly shift a resonant frequency of an antenna formed by the first conductive portion 315. For example, the first impedance element 371 may include a capacitor to shift downwardly the resonant frequency of the antenna. Since the first conductive portion 315 and the first impedance element 371 are electrically connected, the resonance frequency of the antenna in the second state higher than the resonance frequency of the antenna in the first state may decrease. In the second state, the resonance frequency of the antenna may be adjusted to a designated resonance frequency, by the second impedance element 372. It is described that the first impedance element 371 includes an inductor, and the second impedance element 372 includes a capacitor, but is not limited thereto. For example, the first impedance element 371 and the second impedance element 372 may include a capacitor, an inductor, or a combination of the capacitor and the inductor.

Referring to FIG. 8C, the electronic device 300 according to an embodiment may include a sensor 380, at least one processor 120, and wireless communication circuitry 192. According to an embodiment, the wireless communication circuitry 192 may include a communication processor 192a for wireless communication, a radio frequency integrated circuit (RFIC) 192b, and a radio frequency front end (RFEE) 192c.

According to an embodiment, the communication processor 192a may control another hardware components included in the wireless communication circuitry 192 for transmission and/or reception of wireless signals between the electronic device 300 and the distinct external electronic device. For example, in response to receiving a request from at least one processor 120 to transmit data to an external electronic device, the communication processor 192a may output an electrical signal (e.g., a digital data signal) with a frequency band of a baseband based on the data to the RFIC.

According to an embodiment, the RFIC 192b may up-convert a baseband signal generated by the communication processor 192a into a signal on a designated frequency band. When receiving, the wireless signal may be obtained through the first conductive portion 315, and preprocessed through the RFFE 192c. The RFIC 192b may down-convert the preprocessed wireless signal into a baseband signal so that it may be processed by the communication processor 192a.

According to an embodiment, the at least one processor 120 may identify a state of the electronic device 300 based on data obtained through the sensor 380. When the identified state of the electronic device 300 is the first state, at least one processor 120 may electrically connect the first impedance element 371 and the first conductive portion 315 by the switch circuitry 373. In the first state, at least one processor 120 may be configured to communicate with an external electronic device through the first conductive portion 315 using signals on a first frequency band. When the identified state of the electronic device 300 is the second state, at least one processor 120 may electrically connect the second impedance element 372 and the first conductive portion 315 by the switch circuitry 373. In the second state, at least one processor 120 may be configured to communicate with an external electronic device through the first conductive portion 315 using signals on a second frequency band.

According to an embodiment, the first frequency band and the second frequency band may partially overlap each other. The first frequency band and the second frequency band may be formed within a frequency band of a wireless signal to be transmitted and/or received through the antenna A including the first conductive portion 315. For example, the first frequency bands and the second frequency band may overlap at least partially within the frequency range of a low band (e.g., about 700 MHz to about 900 MHz). According to an embodiment, at least one processor 120 may be configured to transmit and/or receive a signal of a target frequency band through an antenna A including the first conductive portion 315. The first impedance element 371 and the second impedance element 372 may compensate for the resonant frequency shifted according to a state of the electronic device 300 to shift the resonant frequency of the antenna A within a target resonant frequency range. Since the first frequency band and the second frequency band are formed in a target frequency band partially overlapping each other, rather than different frequency bands, at least one processor 120 may be configured to transmit and/or receive signals on the target frequency band, independently of the state of the electronic device 300.

Although FIGS. 8A, 8B, and 8C do not illustrate the second non-conductive portion (e.g., the second non-conductive portion 327 of FIG. 5A or 5B or the second non-conductive portion 327 of FIG. 6A or 6B) of the second housing 320, the electronic device 300 of FIGS. 5A, 5B, 6A, and 6B may include a switching element 373, a first impedance element 371, and a second impedance element 372 of FIGS. 8A and 8B.

According to the above-described embodiment, the electronic device 300 may be configured to communicate with an external electronic device in a designated frequency band through the first conductive portion 315 by selectively connecting the first impedance element 371 and the second impedance element 372 to the first conductive portion 315 by the switch circuitry 373, despite a change in the state of the electronic device 300.

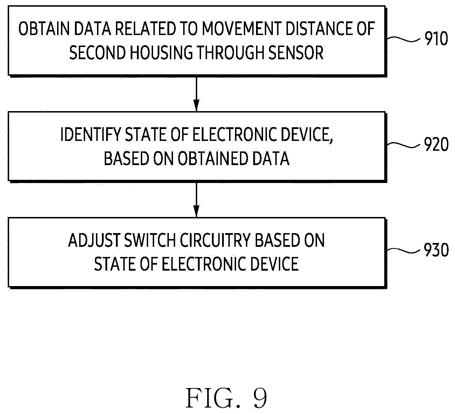

FIG. 9 illustrates an example of an operation of controlling switch circuitry based on a state of an electronic device according to an embodiment.

Referring to FIG. 9, in operation 910, at least one processor 120 (e.g., the at least one processor 120 of FIG. 8C) may be configured to obtain data related to a movement distance of a second housing 320 (e.g., the first housing 310 of FIG. 5A) through a sensor 380 (e.g., the sensor 380 of FIG. 8C). According to an embodiment, the sensor 380 may generate data on the movement distance of the second housing 320 (e.g., the second housing 320 of FIG. 5A) with respect to the first housing 310. For example, the sensor 380 may be a hall sensor capable of obtaining a change in magnitude of a magnetic field and/or a direction of the magnetic field according to the movement of the second housing 320, but is not limited thereto. The at least one processor 120 may receive the generated data from the sensor 380.

In operation 920, at least one processor 120 may identify a state of the electronic device 300 based on the obtained data. According to an embodiment, in operation 920, the at least one processor 120 may compare data received from the sensor 380 with reference data corresponding to a first state and reference data corresponding to a second state. For example, the at least one processor 120 may identify that a state of the electronic device 300 is in the first state when the data is within a range of reference data corresponding to the first state. The reference data corresponding to the first state may be data indicating a state in which the second housing 320 is inserted with respect to the first housing 310. The reference data corresponding to the second state may be data indicating a state in which the second housing 320 is extracted with respect to the first housing 310. In a first state in which the second housing 320 is movable in a first direction (e.g., the +y direction of FIG. 5A) with respect to the first housing 310, since a distance between the sensor 380 disposed in the first housing 310 and the second housing 320 or a magnetic material disposed in the second housing 320 is the shortest distance, the magnitude of the magnetic field obtained through the sensor 380 may be within a first range. In a second state in which the second housing 320 is movable in a second direction (e.g., the -y direction of FIG. 5A) with respect to first housing 310, a distance between the sensor 380 disposed in the first housing 310 and the magnetic material disposed in the second housing 320 is the longest distance, and thus the magnitude of the magnetic field obtained through the sensor 380 may be within a second range. The magnitude of the magnetic field included in the first range may be greater than the magnitude of the magnetic field included in the second range. At least one processor 120 may identify that the state of the electronic device 300 is in the first state when the data is within the first range corresponding to the first state.

In operation 930, the at least one processor 120 may be configured to adjust the switch circuitry 373 based on a state of the electronic device 300.

According to an embodiment, at least one processor 120 may electrically connect the first conductive portion 315 to the first impedance element 371 using the switch circuitry 373, in response to identifying that the identified state of the electronic device 300 is the first state. The resonant frequency of the antenna formed by a first conductive portion 315 (e.g., the first conductive portion 315 of FIG. 5A) may be adjusted by an impedance value of the first impedance element 371. In the first state, since the resonant frequency of the antenna is lower than the second state, a resonant frequency of the antenna may be shifted upwardly to a designated frequency, by electrically connecting the first impedance element 371 to the first conductive portion 315. In the first state, at least one processor 120 may be configured to wirelessly communicate with an external electronic device using signals on the first frequency band, through the first conductive portion 315 electrically connected to the first impedance element 371.

According to an embodiment, the at least one processor 120 may electrically connect the switch circuitry 373 to the second impedance element 372, in response to identifying that the identified state of the electronic device 300 is the second state. The resonant frequency of the antenna formed by the first conductive portion 315 may be adjusted by an impedance value of the second impedance element 372. Since the resonance frequency of the antenna is higher than the first state in the second state, the resonance frequency of the antenna may be shifted downwardly electrically connecting the second impedance element 372 to the first conductive portion 315. In the second state, at least one processor 120 may be configured to wirelessly communicate with an external electronic device using signals on the second frequency band through the first conductive portion 315 electrically connected to the second impedance element 372.

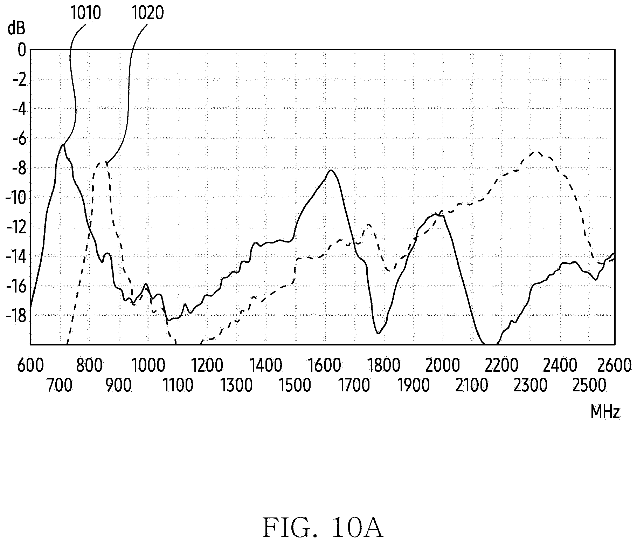

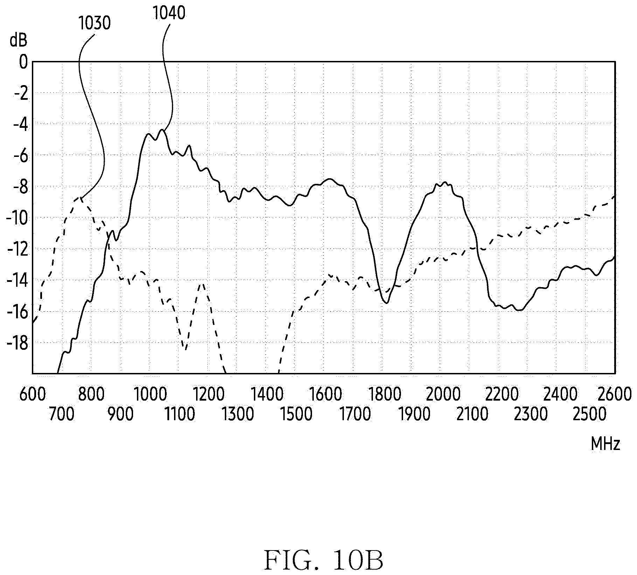

FIG. 10A is a graph illustrating a change in a radiation characteristic of an antenna by a first impedance element in a first state of an electronic device according to an embodiment, and FIG. 10B is a graph illustrating a change in a radiation characteristic of an antenna by a second impedance element in a second state of an electronic device according to an embodiment. The horizontal axis of the graph is frequency (unit : MHz) and the vertical axis of the graph is gain (unit: dB).

Referring to FIG. 10A, in a first state, a resonant frequency of an antenna formed by a first conductive portion 315 (e.g., the first conductive portion 315 of FIG. 5A) may increase when connected to a first impedance element 371 (e.g., the first impedance element 371 of FIG. 8C).

A first graph 1010 represents a radiation characteristic of an antenna in a state in which a first impedance element 371 and a first conductive portion 315 are not electrically connected. For example, a resonance frequency of an antenna in the first state may be about 700 MHz. When transmitting and/or receiving signals on a frequency range of a low band (e.g., about 700 MHz to about 900 MHz) through an antenna, the transmission and/or reception of the wireless signal may not be smooth due to inconsistency in the resonant frequency.

A second graph 1020 represents a radiation characteristic of the antenna in a state in which the first impedance element 371 and the first conductive portion 315 are electrically connected. A resonance frequency of the antenna electrically connected to the first impedance element 371 in the first state may be about 850 MHz. Comparing the first graph 1010 and the second graph 1020, as the resonance frequency of the second graph 1020 increases, the antenna may smoothly transmit and/or receive signals on a frequency range of the low band. According to an embodiment, at least one processor 120 (e.g., the at least one processor 120 of FIG. 8C) may be configured to transmit and/or receive signals on a low band, through an antenna, by electrically connecting the first conductive portion 315 to the first impedance element 371 by controlling switch circuitry 373 (e.g., the switch circuitry 373 of FIG. 8C), when identifying that a state of the electronic device 300 is the first state.

Referring to FIG. 10B, in a second state, a resonant frequency of the antenna formed by the first conductive portion 315 (e.g., the first conductive portion 315 of FIG. 5A) may decreases when connected to the second impedance element 372 (e.g., the second impedance element 372 of FIG. 8C).

A third graph 1030 represents a radiation characteristic of the antenna in a state in which the second impedance element 372 and the first conductive portion 315 are not electrically connected. For example, the resonance frequency of the antenna in the first state may be about 1000 MHz. When transmitting and/or receiving signals on the frequency range of the low band (e.g., about 700 MHz to about 900 MHz) through an antenna, the transmission and/or reception of wireless signals may not be smooth due to inconsistency in the resonant frequency.

A fourth graph 1040 represents a radiation characteristic of the antenna in a state in which the second impedance element 372 and the first conductive portion 315 are electrically connected. In the second state, a resonant frequency of the antenna electrically connected to the second impedance element 372 may be about 800 MHz. Comparing the third graph 1030 and the fourth graph 1040, as a resonant frequency of the fourth graph 1040 decreases, the antenna may smoothly transmit and/or receive signals on the frequency range of the low band. According to an embodiment, at least one processor 120 (e.g., the at least one processor 120 of FIG. 8C) may be configured to transmit and/or receive signals on a low band through the antenna, by electrically connecting the first conductive portion 315 to the second impedance element 372 by controlling the switch circuitry 373 (e.g., the switch circuitry 373 of FIG. 8C), when identifying that the state of the electronic device 300 is the second state.

The electronic device 300 according to an embodiment may maintain the band of the resonant frequency of the antenna through the first impedance element 371 and the second impedance element 372, regardless of the state change of the electronic device 300. According to an embodiment, the electronic device 300 may smoothly transmit and/or receive wireless signals on a designated band (e.g., a low band) through the first conductive portion 315.

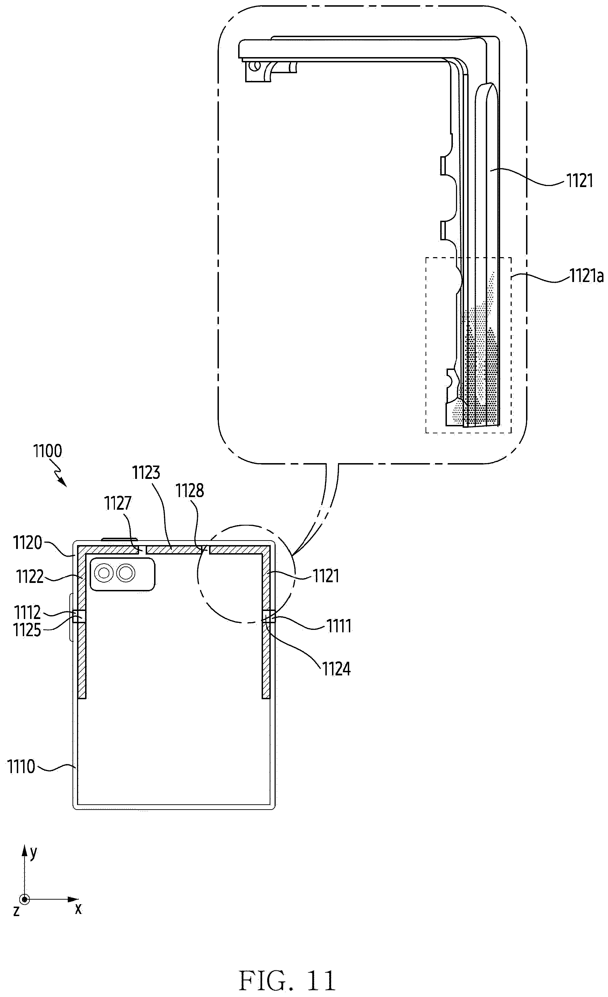

FIG. 11 illustrates a segmental structure of a first housing and a segmental structure of a second housing.

Referring to FIG. 11, a second housing 1120 (e.g., the second housing 320 of FIG. 5A) may include a plurality of conductive portions 1121, 1122, and 1123, which are spaced apart from each other. For example, the second housing 1120 (e.g., the second housing 320 of FIG. 5A) may include a fourth conductive portion 1121 in which a portion is disposed in a lateral surface in the +x direction and a remaining portion is disposed in a lateral surface in the +y direction, a fifth conductive portion 1122 in which a portion is disposed in a lateral surface in the -x direction and a remaining portion is disposed in a lateral surface in the +y direction, and a sixth conductive portion 1123 disposed between the fourth conductive portion 1121 and/or the fifth conductive portion 1122 on the lateral surface in the +y direction. The fourth conductive portion 1121 and the fifth conductive portion 1122 may be located opposite to each other. The non-conductive portions 1124, 1125, 1127, and 1128 may be disposed between the plurality of conductive portions. For example, a third non-conductive portion 1124 may be disposed at an end portion 1121a (e.g., an end portion in the -y direction of the fourth conductive portion 1121) of the fourth conductive portion 1121, and a fourth non-conductive portion 1128 may be disposed at another end portion of the fourth conductive portion 1121. The fourth non-conductive portion 1128 may be disposed between the fourth conductive portion 1121 and the sixth conductive portion 1123. A fifth non-conductive portion 1125 may be disposed at an end portion of the fifth conductive portion 1122 (e.g., an end portion in the -y direction of the fifth conductive portion 1122), and a sixth non-conductive portion 1127 may be disposed at another end portion of the fifth conductive portion 1122. The sixth non-conductive portion 1127 may be disposed between the fifth conductive portion 1122 and the sixth conductive portion 1123. However, the plurality of conductive portions and the plurality of non-conductive portions are merely exemplary, and are not limited thereto.

According to an embodiment, at least one of the plurality of conductive portions 1121, 1122, and 1123 of the second housing 1120 may be fed from wireless communication circuitry 192 (e.g., the wireless communication module 192 of FIG. 1) to operate as an antenna radiator. For example, the fourth conductive portion 1121 may be configured to transmit and/or receive wireless signals on a designated frequency band, when a feeding point of the fourth conductive portion 1121 is fed from the wireless communication circuitry 192.

According to an embodiment, some or all of the second housing 1120 may overlap the first housing 1110, when viewed form the first housing 1110 (e.g., the first housing 310 of FIG. 5A) in the -x direction, in the first state. For example, in the first state, some or all of the fourth conductive portion 1121 and the fifth conductive portion 1122 may be disposed within the first housing 1110. In the first state, the fourth conductive portion 1121 and/or the fifth conductive portion 1122 may be overlapped by the first housing 1110, thereby deteriorating radiation performance (e.g., sensitivity) of the antenna including the fourth conductive portion 1121 and/or the fifth conductive portion 1122. For example, in the first state, electromagnetic waves emitted by the fourth conductive portion 1121 and/or the fifth conductive portion 1122 may be reflected or distorted by the first housing 1110 including a conductive portion, and thus may be difficult to transmit to the outside.

According to an embodiment, an antenna including the fourth conductive portion 1121 may have a strong current density at an end portion 1121a (e.g., an end portion in the -y direction of the fourth conductive portion 1121) of the fourth conductive portion 1121. Electromagnetic waves may be emitted to the outside at the end portion where a strong current density is formed.

When an antenna including the fourth conductive portion 1121 is formed, all or some of the fourth conductive portion 1121 may be covered by the first housing 1110, thereby causing a change in current density of the fourth conductive portion 1121. Since the change in current density affects the formation of the electric field, performance degradation (e.g., decrease in sensitivity) of the antenna may occur.

According to an embodiment, in order to reduce the change in the current density of the fourth conductive portion 1121 and/or the fifth conductive portion 1122 in the first state, the first housing 1110 may include non-conductive portions 1111 and 1112 at a point corresponding to an end portion 1121a of the fourth conductive portion 1121 and/or a point corresponding to an end portion of the fifth conductive portion 1122. For example, the first housing 1110 may include a seventh non-conductive portion 1111 overlapping the third non-conductive portion 1124 when viewed from the first housing 1110 in the -x direction in the first state. For example, the first housing 1110 may include an eighth non-conductive portion 1112 overlapping the fifth non-conductive portion 1125 when viewed from the first housing 1110 in the +x direction in the first state.

According to one example, since the seventh non-conductive portion 1111 is disposed at a point corresponding to an end portion of high current density when an antenna including the fourth conductive portion 1121 is formed, electromagnetic waves emitted from the fourth conductive portion 1121 may be transmitted to the outside of the electronic device 1100 through the seventh non-conductive portion 1111. According to an embodiment, since the eighth non-conductive portion 1112 is disposed at a point corresponding to an end portion of high current density when an antenna including the fifth conductive portion 1122 is formed, electromagnetic waves emitted from the fifth conductive portion 1122 may be transmitted to the outside of the electronic device 1100 through the eighth non-conductive portion 1112. According to an embodiment, the electronic device 1100 may reduce performance degradation of the antenna in the first state.

According to an embodiment, an electronic device (e.g., the electronic device 300 of FIG. 5A) may include a first housing (e.g., the first housing 310 of FIG. 5A), a second housing (e.g., the second housing 320 of FIG. 5B), a display (e.g., the display 330 of FIG. 4A), and wireless communication circuitry (e.g., the wireless communication circuitry 192 of FIG. 8C).

The first housing may include a side member (e.g., the first side member 314 of FIG. 5A) including a first conductive portion (e.g., the first conductive portion 315 of FIG. 5A), a second conductive portion (e.g., the second conductive portion 316 of FIG. 5A), and a first non-conductive portion (e.g., the first non-conductive portion 317 of FIG. 5A). The second conductive portion may be spaced apart from the first conductive portion. The first non-conductive portion may be disposed between the first conductive portion and the second conductive portion. The support member may form a lateral surface of the first housing.

The second housing may include a second non-conductive portion (e.g., the second non-conductive portion 327 of FIG. 5B). The second housing may be movably coupled to the first housing in a first direction.

The display may be disposed in the second housing. The display may be expanded or contracted according to movement of the second housing.

The wireless communication circuitry may be configured to communicate with an external electronic device through the first conductive portion.

The second non-conductive portion may include a first portion (e.g., the first portion 327a of FIG. 5B) and a second portion (e.g., the second portion 327b of FIG. 5B). The first portion may overlap at least a portion of the first conductive portion, when viewed from a lateral surface of the first housing parallel to the first direction, in a first state in which the second housing is inserted into the first housing. The second portion may extend from the first portion to a first lateral surface (e.g., the first lateral surface 325 of FIG. 5A) of the second housing facing the first conductive portion.

The second portion of the second non-conductive portion may be spaced apart from the first non-conductive portion in the first direction, when viewed form the lateral surface of the first housing, in the second state in which the second housing is extracted from the first housing.

According to an embodiment, in the first state, the first portion may extend from a second lateral surface (e.g., the second lateral surface 326 of FIG. 5A) of the second housing facing a second direction opposite to the first direction, along the first lateral surface of the second housing facing the first conductive portion, a region corresponding to the first non-conductive portion.

According to an embodiment, the second portion may overlap the first non-conductive portion when viewed from the lateral surface of the first housing in the first state.

According to an embodiment, the first portion may be spaced apart from the first non-conductive portion in the first direction, when viewed from the lateral surface of the first housing, in the second state.

According to an embodiment, at least a portion of the first portion may extend in the first direction from a boundary between the first housing and the second housing, and may be disposed outside the first housing in the second state.

According to an embodiment, the second portion may be spaced apart from the first housing in the second state.

According to an embodiment, the electronic device may include a first impedance element (e.g., the first impedance element 371 of FIG. 8C) and a second impedance element (e.g., the second impedance element 372 of FIG. 8C) having a different impedance from the first impedance element, and switch circuitry (e.g., the switch circuitry 373 of FIG. 8C) that electrically connects the first conductive portion to the first impedance element or the second impedance element.

According to an embodiment, in the first state, the first impedance element electrically connected to the first conductive portion by the switch circuitry may be configured to increase a resonance frequency of an antenna including at least a portion of the first conductive portion. According to an embodiment, in the second state, the second impedance element electrically connected to the first conductive portion by the switch circuitry may be configured to decrease the resonance frequency of the antenna including at least a portion of the first conductive portion.

According to an embodiment, the electronic device may include a sensor (e.g., the sensor 380 of FIG. 8C) for detecting a movement distance of the second housing and at least one processor (e.g., the processor 120 of FIG. 8C) for operably connecting the sensor, the switch circuitry, and the first conductive portion. The at least one processor may be configured to obtain data related to the movement distance of the second housing through the sensor, adjust the switch circuitry based on the obtained data, and adjust the resonance frequency of the antenna including at least a portion of the first conductive portion.

According to an embodiment, the at least one processor may be configured to, when based on the identified state of the electronic device being the first state based on the data, electrically connect the first impedance element and the first conductive portion by the switch circuitry, and communicate with an external electronic device through the first conductive portion using signals on a first frequency band.

At least one processor may be configured to, based on the identified state of the electronic device being the second state, electrically connect the second impedance element and the first conductive portion by the switch circuitry, and communicate with an external electronic device through the first conductive portion using signals on a second frequency band overlapping the first frequency band.

According to an embodiment, the first impedance element may include an inductor. The second impedance element may include a capacitor.

According to an embodiment, the second portion may include a third portion (e.g., the third portion 327c of FIG. 6C) extending from an end portion of the first portion opposite to another end portion of the first portion contacted with the second portion to the first lateral surface of the second housing. The first portion may extend from a second lateral surface of the second housing facing the second direction, along the first lateral surface of the second housing facing the first conductive portion in the first state, to a region between the first non-conductive portion and the second lateral surface.

According to an embodiment, the second portion may overlap the first conductive portion when viewed from the lateral surface of the first housing in the first state.

According to an embodiment, the second conductive portion may be spaced apart from the first conductive portion in the first direction. The first portion may overlap the second conductive portion when viewed from the lateral surface of the first housing in the second state.

According to an embodiment, the first portion may be surrounded by the first housing independently of the state of the electronic device.

According to an embodiment, the second housing may include a third conductive portion (e.g., the third conductive portion 328 of FIG. 5A) surrounded by the second non-conductive portion. The third conductive portion may form a portion of the first lateral surface of the second housing. The third conductive portion may face the first conductive portion.

The first conductive portion may be coupled with the third conductive portion.

According to an embodiment, the electronic device (e.g., the electronic device 300 of FIG. 5A) may include a first housing (e.g., the first housing 310 of FIG. 5A), a second housing (e.g., the second housing 320 of FIG. 5B), a display (e.g., the display 330 of FIG. 4A), and wireless communication circuitry (e.g., the wireless communication circuitry 192 of FIG. 8C).

The first housing may include a side member (e.g., the first side member 314 of FIG. 5A) including a first conductive portion (e.g., the first conductive portion 315 of FIG. 5A), a second conductive portion (e.g., the second conductive portion 316 of FIG. 5A), and a first non-conductive portion (e.g., the first non-conductive portion 317 of FIG. 5A). The second conductive portion may be spaced apart from the first conductive portion. The first non-conductive portion may be disposed between the first conductive portion and the second conductive portion. The support member may form a lateral surface of the first housing.

The second housing may include a third conductive portion (e.g., the third conductive portion 328 of FIG. 5A) and a second non-conductive portion (e.g., the second non-conductive portion 327 of FIG. 5B) surrounding a portion of the third conductive portion. The second housing may be movably coupled to the first housing in a first direction and a second direction opposite toe the first direction.

The display may be disposed on the second housing. The display may be expanded or contracted according to movement of the second housing.

The wireless communication circuitry may be configured to communicate with an external electronic device through the first conductive portion.

The second non-conductive portion may be disposed between a portion of the second housing on which the third conductive portion coupled to the first conductive portion is disposed and a remaining portion of the second housing.

According to an embodiment, the third conductive portion may be disposed between the second non-conductive portion and the first conductive portion, in the first state in which the second housing is inserted into the first housing.

According to an embodiment, the third conductive portion may be spaced apart from the first non-conductive portion in the first direction, in the second state in which the second housing is extracted from the first housing.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing including a side member, the side member, forming lateral surfaces of the first housing, including a first conductive portion, a second conductive portion spaced apart from the first conductive portion, and a first non-conductive portion disposed between the first conductive portion and the second conductive portion;
a second housing, including a second non-conductive portion, movably coupled to the first housing in a first direction;
a display in which a region exposed to an outside expands or contracts according to movement of the second housing; and
wireless communication circuitry configured to communicate with an external electronic device through the first conductive portion,
wherein the second non-conductive portion includes a first portion at least partially overlapping the first conductive portion, and a second portion extending from the first portion to a first lateral surface of the second housing facing the first conductive portion, when viewed from a lateral surface of the first housing parallel to the first direction in a first state in which the second housing is inserted into the first housing, and
wherein the second portion of the second non-conductive portion is spaced apart from the first non-conductive portion in the first direction, when viewed from the lateral surface of the first housing in a second state in which the second housing is extracted from the first housing.

2. The electronic device of claim 1,
wherein the first portion of the second non-conductive portion extends from a second lateral surface facing the second direction opposite to the first direction, along the first lateral surface of the second housing facing the first conductive portion in the first state, to a region corresponding to the first non-conductive portion.

3. The electronic device of claim 1,
wherein the second portion overlaps the first non-conductive portion, when viewed from a lateral surface of the first housing parallel to the first direction in the first state.

4. The electronic device of claim 1,
wherein the first portion is spaced apart from the first non-conductive portion in the first direction, when viewed from the lateral surface of the first housing in the second state.

5. The electronic device of claim 1,
wherein at least a portion of the first portion, extending in the first direction from a boundary between the first housing and the second housing, is disposed outside the first housing in the second state.

6. The electronic device of claim 1,
wherein the second portion is spaced apart from the first housing in the second state.

7. The electronic device of claim 1, further comprising:
a first impedance element and a second impedance element having an impedance value different from an impedance value of the first impedance element; and
switch circuitry configured to electrically connect the first conductive portion to the first impedance element or the second impedance element.

8. The electronic device of claim 7,
wherein the first impedance element, electrically connected to the first conductive portion through the switch circuitry in the first state, is configured to increase a resonant frequency of an antenna including at least a portion of the first conductive portion, and
wherein the second impedance element, electrically connected to the first conductive portion through the switch circuitry in the second state, is configured to decrease the resonant frequency of the antenna including at least a portion of the first conductive portion.

9. The electronic device of claim 7, further comprising:
a sensor to detect a movement distance of the second housing; and
at least one processor including processing circuitry,
wherein the at least one processor is configured to:
obtain data related to the movement distance of the second housing through the sensor, and
adjust the resonant frequency of the antenna including at least a portion of the first conductive portion, by controlling the switch circuitry based on the data.

10. The electronic device of claim 9,
wherein the at least one processor is configured to:
based on identifying the first state based on the data, electrically connect the first impedance element and the first conductive portion through the switch circuitry, and communicate with the external electronic device using signals on a first frequency band through the first conductive portion, and
based on identifying the second state based on the data, electrically connect the second impedance element and the first conductive portion through the switch circuitry, and communicate with the external electronic device using signals on a second frequency band partially overlapping the first frequency band through the first conductive portion.

11. The electronic device of claim 1,
wherein the second non-conductive portion includes a third portion extending from an end portion of the first portion opposite to another end portion contacted with the second portion to the first lateral surface of the second housing, and
wherein the first portion extends from a second lateral surface of the second housing facing the second direction opposite to the first direction, along the first lateral surface of the second housing facing the first conductive portion in the first state, to a region between the first non-conductive portion and the second lateral surface of the second housing.

12. The electronic device of claim 1,
wherein the second portion overlaps the first conductive portion, when viewed from the lateral surface of the first housing in the first state.

13. The electronic device of claim 1,
wherein the second conductive portion is spaced apart from the first conductive portion in the first direction, and
wherein the first portion overlaps the second conductive portion, when viewed from the lateral surface of the first housing in the second state.

14. The electronic device of claim 1,
wherein the first portion is surrounded by the first housing independently of a state of the electronic devices.

15. The electronic device of claim 1,
wherein the second housing includes a third conductive portion surrounded by the second non-conductive portion, and
wherein the third conductive portion forms a portion of the first lateral surface of the second housing and faces the first conductive portion.
